# EUROPEAN PATENT APPLICATION

(11) **EP 1 298 564 A1**
(43) Date of publication of application: **02.04.2003**
(21) Application number: 02021744.4
(22) Date of filing: 25.09.2002
(51) Int. Cl.: G06F 17/60

(54) **Vehicle sales support system, vehicle sales support program and vehicle sales support method**

(30) Priority: 28.09.2001 JP 2001298808; 28.09.2001 JP 2001303025; 26.07.2002 JP 2002217711
(71) Applicant: Mazda Motor Corporation, Aki-gun, Hiroshima 730-8670 (JP)
(72) Inventor: Takaoka, Hiroki, Aki-gun, Hiroshima 730-8670 (JP)
(74) Representative: Müller-Boré & Partner Patentanwälte

(57) **Abstract**

In a vehicle sales support system for supporting vehicle sales to customers online by providing an estimated price of a vehicle calculated on the basis of calculation data stored in an estimated price DB, the calculation data stored in the estimated price DB is corrected/updated on the basis of prescribed data stored in a reference information DB. Thus, an improper estimated price can be prevented from being provided to a customer.

## Description

### BACKGROUND OF THE INVENTION

The present invention relates to a vehicle sales support system, a vehicle sales support program and a vehicle sales support method.

In a conventionally known vehicle sales support system, as described in, for example, Japanese Laid-Open Patent Publication No. 5-274326, catalogue information on vehicles computerized in the form of multimedia information is previously stored, and if a vehicle has various optional specification items such as a color, a design and optional equipment, a customer selects preferred specification items and equipment by selecting menu items, so that the appearance of the vehicle having the selected preferred specification (hereinafter referred to as the selectively specified vehicle) can be visualized for providing purchase support information to the customer.

Also, a system in which price estimate, inquiry about delivery time, order receipt and the like regarding the selectively specified vehicle can be performed online is known.

In actual vehicle sales (namely, offline vehicles sales), a plurality of distributors sell vehicles of the same model. A customer who is considering to purchase the vehicle selects a desired one of the plural distributors, and requests for an estimate of the selected distributor. The distributor thus requested for the estimate provides, to the customer, an estimated price corresponding to a price obtained by subtracting a discount determined by itself from a manufacturer recommended retail price.

This method of providing an estimated price offline can be applied to the case where an estimated price is provided online. Specifically, also in the case where an estimated price is provided online, it is a distributor that actually sells a vehicle to a customer, and therefore, when a customer requests for an estimated price of a selectively specified vehicle selected online, the customer is allowed to specify a desired one of a plurality of distributors. Then, an estimated price of the selectively specified vehicle set by the specified distributor is provided to the customer.

In this case, the estimated price can be provided in, for example, the following manner: Information of the specification of the selectively specified vehicle selected by the customer is provided to the distributor specified by the customer. The distributor having received the information decides the estimated price of the selectively specified vehicle every time such information is received, so that the thus decided estimated price can be provided to the customer.

However, when the distributor decides the estimated price of a vehicle every time an estimate request is received from a customer, if a plurality of estimate requests regarding vehicles having the same specification are received at time intervals, a distributor having received these estimate requests should decide the same estimated price every time to provide it to the customers. Therefore, the efficiency in sales business of the distributor is lowered.

Also, in such a system in which a specification is selected online, the number of specification items selectable by customers tends to increase. Therefore, it has become difficult for a distributor to decide appropriate estimated prices of various vehicles having different specifications in response to estimate requests from customers.

As a countermeasure, an estimated price database (DB) for storing calculation data based on which estimated prices of vehicles having respective specifications can be calculated with respect to each distributor may be provided. Thus, when a customer requests for an estimated price of a selectively specified vehicle with a distributor specified, the estimated price of the selectively specified vehicle set by the specified distributor is calculated on the basis of the calculation data stored in the estimated price DB, so that the calculated estimated price can be provided to the customer. As a result, the efficiency in sales business of the distributor can be improved.

In the offline vehicle sales form, when a customer is desired to get an estimated price of a vehicle, the customer needs to actually visit a distributor. Therefore, in order to get estimated prices of a plurality of distributors, the customer needs to visit all the distributors. Thus, it is not easy for a customer to get estimated prices of a large number of distributors in the offline vehicle sales form.

Also, in the offline vehicle sales form, when a distributor provides an estimated price to a customer, the distributor actually has business talk with the customer in a shop of the distributor. Therefore, the distributor can get a variety of information during the business talk and can decide the estimated price in consideration of the information, and hence, the estimated price can be easily set to an appropriate price. Furthermore, even after the estimated price is provided to the customer, if, for example, the customer gets an estimated price of another distributor, a new estimated price decided in consideration of this estimated price of another distributor can be provided again. Thus, the distributor can continue negotiations with the customer.

In the system in which an estimated price is provided online, however, a customer can easily get an estimated price without visiting a distributor. Therefore, the customer naturally gets estimated prices of a large number of distributors with respect to one selectively specified vehicle. When the customer who has thus got the plural estimated prices online determines a distributor to have negotiations for the purchase of the vehicle, since the customer did not actually visit the distributors, the estimated prices are the principal data for the selection. In other words, the customer generally enters into negotiations with a distributor which has presented the lowest estimated price. Accordingly, a distributor which has presented an estimated price much higher than those presented by the other distributors loses an opportunity of negotiations with the customer.

Accordingly, in the system in which an estimated price is provided online, it is extremely significant how the estimated price is set to an appropriate price. However, in order to previously store the calculation data for enabling calculation of estimated prices in the estimated price DB, each distributor should set the calculation data before receiving estimate requests from customers, which is not easy.

Also, an appropriate estimated price of a vehicle is varied depending upon a variety of factors (such as time elapsed from the sales start of the vehicle). Therefore, even when the calculation data is set to be stored in the estimated price DB, unless each distributor appropriately modifies or updates the calculation data thereafter, an appropriate estimated price cannot be provided to a customer. For this purpose, for example, an estimated price calculated based on the calculation data stored in the estimated price DB may be presented once to a distributor before providing it to a customer. Thus, the distributor can re-set the estimated price to an appropriate price if necessary, so that the re-set estimated price can be provided to the customer. However, even in this case, the distributor having received the calculated estimated price may provide that estimated price to the customer without modifying it when, for example, the distributor is very busy. Accordingly, in order to provide an appropriate estimated price, the update of the estimated price DB is indispensable.

Furthermore, a new-model vehicle is relatively highly competitive in general and hence is desired to be actively sold by a distributor. Therefore, the calculation data regarding a new-model vehicle stored in the estimated price DB is frequently updated by each distributor immediately after the sales start, so that an appropriate estimated price can be provided to a customer. However, as time elapses from the sales start, the competitive power of that vehicle model is relatively lowered, and it is sold at a discount price, and hence, the vehicle is not actively sold by the distributor. Therefore, each distributor do not frequently update the estimated price DB. As a result, even though a vehicle of that model becomes less competitive in accordance with the time elapsed from the sales start, an estimated price calculated based on the calculation data stored in the estimated price DB remains comparatively high, so that an appropriate estimated price cannot be provided to a customer.

Moreover, in the system in which an estimated price is provided online, in the case where a distributor could not enter into negotiations with a customer to which an estimated price was presented, the distributor cannot grasp the reason why the customer did not enter into negotiations. Specifically, the distributor having presented the estimated price cannot distinguish a case where the customer did not enter into negotiations because the estimated price was not proper (i.e., for example, the estimated price was too high and hence the customer entered into negotiations with another distributor having presented a lower estimated price) from a case where the presented estimated price was appropriate but the customer did not enter into negotiations for another reason (of, for example, schedule of the customer). Accordingly, it is difficult for a distributor to determine at what timing and to what extent the calculation data of the estimated price DB should be updated. As a result, the update of the estimated price DB may be avoided.

In addition, in the system in which specification items are selected online, since the number of specification items selectable by a customer tends to increase as described above, it is difficult for each distributor to update the estimated price DB for providing appropriate estimated prices with respect to all the specification items. This is also a great obstacle to set an appropriate estimated price.

The present invention was devised in consideration of these conventional problems, and an object of the invention is, in a vehicle sales support system for supporting vehicle sales to customers online by providing, to a customer, an estimated price of a vehicle calculated on the basis of calculation data stored in an estimated price database, preventing an improper estimated price from being provided to a customer.

### SUMMARY OF THE INVENTION

In order to achieve the object, the the invention is directed to a vehicle sales support or configuration system for supporting vehicle sales to or configuration by customers online by allowing a customer to select, via communications lines, a preferred specification or configuration from a plurality of different specifications or configurations set with respect to a vehicle and sending, to the customer, an estimated price, which is set by a distributor specified by the customer among a plurality of distributors, of a selectively specified or configured vehicle having the selected specification.

The vehicle sales support system of the invention includes a manufacturer recommended retail price database for storing data for enabling calculation of manufacturer recommended retail prices of vehicles respectively having the plurality of specifications or configurations; an estimated price database for storing calculation data for enabling calculation of estimated prices, set by each of the plurality of distributors, of the vehicles respectively having the plurality of specifications or configurations; a reference information database for storing prescribed data necessary for correcting the calculation data stored in the estimated price database; specification or configuration selecting means for allowing the customer to selectively input a desired specification or configuration with the plurality of specifications or configurations of the vehicle presented, setting the selectively input specification or configuration as the selected specification of the selectively specified or configured vehicle, calculating a manufacturer recommended retail price of the selectively specified or configured vehicle on the basis of the data stored in the manufacturer recommended retail price database, and providing the calculated manufacturer recommended retail price to the customer; distributor specifying means for allowing the customer to specify and input a desired distributor with the plurality of distributors presented, and setting the input distributor as a specified distributor; estimated price calculating means for calculating, in response to an estimate request input by the customer, an estimated price, which is set by the specified distributor set by the distributor specifying means, of the selectively specified or configured vehicle set by the specification or configuration selecting means on the basis of the calculation data stored in the estimated price database; estimated price providing means for providing the estimated price calculated by the estimated price calculating means to the customer or providing the estimated price and information of the selected specification to the specified distributor; and updating means for correcting the calculation data set by each distributor stored in the estimated price database on the basis of the prescribed data stored in the reference information database, and updating the estimated price database on the basis of the corrected calculation data.

Herein, the "distributor" includes each shop belonging to the distributor and a seller of the distributor.

According to theinvention, the specification or configuration selecting means presents the plurality of specifications or (technical) configurations of the vehicle and allows the customer to selectively input a desired specification or configuration. The specification or configuration selecting means sets the thus selectively input specification or configuration as the selected specification or configuration, calculates the manufacturer recommended retail price of the selectively specified or configured vehicle on the basis of the data stored in the manufacturer recommended retail price database, and provides the calculated manufacturer recommended retail price to the customer.

The distributor specifying means presents the plurality of distributors and allows the customer to specify and input a distributor. The customer can specify a desired distributor among the plural distributors.

The estimated price calculating means calculates, in response to the estimate request input by the customer, the estimated price, which is set by the specified distributor set by the distributor specifying means, of the selectively specified or configured vehicle selected by the specification selecting means on the basis of the calculation data stored in the estimated price database. At this point, the calculation data to be stored in the estimated price database can be previously set by each distributor.

The estimated price providing means provides the estimated price calculated by the estimated price calculating means to the customer, or provides the estimated price and the selected specification or configuration to the specified distributor. (In the latter case, the specified distributor can set a new estimated price by using the provided estimated price as a reference estimated price, so as to provide the new estimated price to the customer. The same price as the reference estimated price can be set as the new estimated price.) In this manner, since the estimated price is calculated on the basis of the calculation data stored in the estimated price database to be provided to the customer, even when a plurality of estimate requests regarding a vehicle having the same specification or configuration are received at time intervals, there is no need for the distributor to set the estimated price a plurality of times. As a result, the efficiency in the configuration of the vehicle by the customer and in the sales business operation of the distributor can be improved.

The updating means corrects the calculation data of each distributor stored in the estimated price database on the basis of the prescribed data stored in the reference information database, and updates the estimated price database on the basis of the corrected calculation data. Therefore, even if the distributor neglects update of the calculation data stored in the estimated price database, the calculation data can be automatically corrected to be updated by the updating means. Since the estimated price database is thus updated, an appropriate estimated price can be provided to a customer therefore improving overall effectiveness of the system.

When, for example, an estimated price provided to a customer online is improper (namely, when the estimated price is much higher than an estimated price set by another distributor), the customer enters into negotiations with the other distributor having presented a lower estimated price. Therefore, the distributor having presented an improper estimated price tends to lose an opportunity of negotiations. However, since an appropriate estimated price can be provided to a customer as described above according to theinvention, an opportunity of negotiations is minimally lost against the intention of the distributor.

Furthermore, even when the number of specification or configuration items selectable by a customer is large, the updating means automatically corrects the calculation data stored in the estimated price database so as to update the estimated price database, and hence, the burden of the distributor can be reduced.

In this manner, according to theinvention, an improper estimated price can be prevented from being provided to a customer although each distributor does not update the estimated price database for storing the calculation data set by the distributor to be used for calculating an estimated price. As a result, each distributor minimally loses an opportunity of negotiations and each customer can get an estimated price appropriate according to the market price online therefore improving overall effectiveness of the system.

The vehicle sales support or configuration system further according to the invention includes the manufacturer recommended retail price database; the estimated price database; a reference information database for storing prescribed data necessary for correcting the estimated prices calculated on the basis of the calculation data stored in the estimated price database; specification or configuration selecting means for allowing the customer to selectively input a desired specification or configuration with the plurality of specifications or configurations of the vehicle presented, setting the selectively input specification or configuration as the selected specification or configuration of the selectively specified or configured vehicle, calculating a manufacturer recommended retail price of the selectively specified or configured vehicle on the basis of the data stored in the manufacturer recommended retail price database, and providing the calculated manufacturer recommended retail price to the customer; distributor specifying means for allowing the customer to specify and input a desired distributor with the plurality of distributors presented, and setting the input distributor as a specified distributor; estimated price calculating means for calculating, in response to an estimate request input by the customer, an estimated price, which is set by the specified distributor set by the distributor specifying means, of the selectively specified or configured vehicle set by the specification selecting means on the basis of the calculation data stored in the estimated price database; correcting means for correcting the estimated price calculated by the estimated price calculating means on the basis of the prescribed data stored in the reference information database; and estimated price providing means for providing the estimated price corrected by the correcting means to the customer or providing the estimated price corrected by the correcting means and information of the selected specification or configuration to the specified distributor.

Accordingly, the specification or configuration selecting means presents the plurality of specifications or configurations of the vehicle and allows the customer to selectively input a desired specification as described above. Also, the specification selecting means calculates the manufacturer recommended retail price of the selectively specified or configured vehicle on the basis of the data stored in the manufacturer recommended retail price database, and provides the calculated manufacturer recommended retail price to the customer.

The distributor specifying means presents the plurality of distributors and allows the customer to specify and input a distributor.

The estimated price calculating means calculates, in response to the estimate request input by the customer, the estimated price, which is set by the specified distributor set by the distributor specifying means, of the selectively specified or configured vehicle selected by the specification or configuration selecting means on the basis of the calculation data stored in the estimated price database.

The correcting means corrects the estimated price calculated by the estimated price calculating means on the basis of the prescribed data stored in the reference information database.

The estimated price providing means provides the estimated price corrected by the correcting means to the customer, or provides the estimated price and the selected specification to the specified distributor (namely, provides the estimated price as reference information.)

The estimated price calculated on the basis of the calculation data stored in the estimated price database in this manner is provided to the customer. Therefore, the efficiency in the (technical) configuration of the vehicle by the customer and also in the sales business operation of the distributor can be improved.

Also, since the correcting means corrects the calculated estimated price before providing it to the customer, even if the distributor neglects the update of the calculation data stored in the estimated price database, an appropriate estimated price can be provided to a customer.

In this manner, according tothis embodiment, an improper estimated price can be prevented from being provided to a customer by the correction performed by the correcting means. In other words, the preferred embodiment achieves the same result as that achieved by the update of the estimated price database. As a result, as described above, each distributor minimally loses an opportunity of negotiations and each customer can get an estimated price appropriate according to the market price online.

Preferably, the prescribed data stored in the reference information database corresponds to a sales start time of the vehicle, and the updating means corrects the calculation data set by each distributor and stored in the estimated price database on the basis of elapsed time from the sales start time of the vehicle in a manner that the estimated prices of the vehicles respectively having the plurality of specifications calculated by the estimated price calculating means are lower as the elapsed time is longer.

Specifically, as the elapsed time from the sales start time is longer, the vehicle (model) is more likely to be sold at a discount price. In this case, the vehicle is not actively sold by the distributor, and hence, the frequency of updating the estimated price database by the distributor tends to lower. However, the updating means corrects the calculation data of each distributor stored in the estimated price database so that the estimated price of a vehicle having each specification calculated by the estimated price calculating means can be lowered as the elapsed time from the sales start time of the vehicle is longer. Accordingly, an estimated price calculated by the estimated price calculating means in response to an estimate request from a customer can be an appropriate price. For example, an estimated price largely exceeding one set by another distributor can be prevented from being provided to a customer.

Preferably, the prescribed data stored in the reference information database corresponds to a sales start time of the vehicle, and the correcting means corrects, on the basis of elapsed time from the sales start time of the vehicle, the estimated price calculated by the estimated price calculating means to be lower as the elapsed time is longer.

As described above, the frequency of updating the estimated price database by the distributor lowers as the elapsed time from the sales start time is longer. However, since the correcting means corrects the estimated price calculated by the estimated price calculating means to be lower as the elapsed time is longer, an appropriate estimated price can be provided to a customer.

Further preferably, the prescribed data stored in the reference information database corresponds to an estimated price of a vehicle already provided to the customer and a lower limit estimated price set by each distributor with respect to each of the plurality of specifications, and when it is found based on the prescribed information that the customer having input the estimate request is already provided with an estimated price of a vehicle having a specification or configuration identical to the selected or configuration specification related to the estimate request, the correcting means corrects the estimated price of the selectively specified vehicle calculated by the estimated price calculating means to be lower than the already provided estimated price by a given value and to be higher than the lower limit estimated price of the selected specification or configuration. At this point, the lower limit estimated price can be set by each distributor as a limit price allowable as the estimated price (sales price) of the vehicle having each specification or configuration.

At this point, it is assumed that one customer makes a plurality of estimate requests regarding the same selectively specified or configured vehicle with a plurality of different distributors respectively specified. In this case, the correcting means corrects the estimated price calculated by the estimated price calculating means so as to be lower than any of the estimated prices previously presented to the customer by a predetermined value. Thus, an estimated price lower than at least the previously provided estimated prices (for example, those set by other distributors) can be provided to the customer. Also, since the estimated price is corrected within the limit of the lower limit estimated price previously set by the distributor, a price not allowable by the distributor can be avoided from being provided. Accordingly, the overall efficiency of the system is improved.

In this manner, an estimated price largely exceeding one set by another distributor can be minimally provided to the customer. As a result, each distributor minimally loses an opportunity of negotiations and each customer can get an estimated price appropriate according to the market price online.

Preferably, when the estimated price already provided to the customer having input the estimate request is provided by the specified distributor related to the estimate request, the correcting means is inhibited from correcting the estimated price calculated by the estimated price calculating means.

Specifically, in the case where the correcting means corrects the estimated price to be provided to a customer who is already provided with the estimated price of the same selectively specified or configured vehicle in the above-described manner, for example, if the customer makes a plurality of estimate requests regarding the same selectively specified or configured vehicle with the same distributor specified, the estimated price lowers every time the estimate request is made. Such lowering of the estimated price leads to spoil the reliability. Alternatively, when the customer makes a plurality of estimate requests regarding the same selectively specified or configured vehicle with a plurality of different distributors respectively specified, a distributor that sets its lower limit estimated price to the lowest price provides the lowest estimated price as a result. In this case, negotiations are collected to this distributor.

In contrast, according to this embodiment, when the estimated price already provided to the customer is provided by the specified distributor related to the estimate request, the estimated price correction by the correcting means is inhibited. Therefore, the aforementioned problems can be overcome and the reliability and effectiveness of the system is improved. When the estimated price correction by the correcting means is inhibited, the same price as the estimated price already provided to the customer is provided as the estimated price to the customer.

Preferably, the vehicle sales support or configuration system further includes lower limit modifying means for modifying the lower limit estimated price of each specification stored in the reference information database with respect to each distributor, and the lower limit modifying means lowers, on the basis of the elapsed time from the sales start time of the vehicle, the lower limit estimated price of each specification or configuration as the elapsed time is longer.

As described above, as the elapsed time from the sales start time is longer, the vehicle is more likely to be sold at a discount price. According to this embodiment, the lower limit modifying means automatically lowers the lower limit estimated price of each distributor in accordance with the elapsed time. Therefore, the lower limit estimated price can be set to an appropriate value according to the market price, so that an appropriate estimated price can be provided to a customer.

Further preferably, the estimated price providing means allows the specified distributor to input an estimated price of the selectively specified or configured vehicle with the estimated price and the information of the selected specification or configuration presented, and provides the input estimated price to the customer.

In this embodiment, the estimated price providing means provides the estimated price to the specified distributor before providing it to the customer, so that the specified distributor can input a new estimated price. Therefore, the specified distributor can set a more appropriate estimated price in consideration of the current situation (such as lowering of the market prices of vehicles). Thus, a more appropriate estimated price can be provided to a customer.

Further preferably, the prescribed data stored in the reference information database corresponds to data regarding correlation between a specification or configuration and a price of the vehicle, and the updating means corrects the calculation data set by each distributor and stored in the estimated price database in a manner that, in comparing a vehicle having a given specification or configuration with a vehicle having another specification or configuration, a difference in estimated price calculated by the estimated price calculating means corresponds to a difference in specification or configuration between these vehicles.

In the case where the updating means corrects the calculation data on the basis of, for example, the prescribed data stored in the reference information database, when the estimated prices of the vehicles having the respective specifications calculated on the basis of the calculation data are mutually compared, a difference in estimated price may be too small although a difference in specification or configuration is rather large, or a difference in estimated price may be too large although a difference or configuration in specification is small.

Therefore, the updating means corrects the calculation data of each distributor stored in the estimated price database, so that, in comparing a vehicle having a given specification or configuration with a vehicle having another specification or configuration, a difference in estimated price can correspond to a difference in specification or configuration therebetween. Thus, the estimated price of the vehicle having each specification or configuration can be set to an appropriate price so that the overall effectiveness of the system is improved.

Further preferably, the prescribed data stored in the reference information database corresponds to data regarding correlation between a specification or configuration and a price of the vehicle, and the correcting means corrects the estimated price in a manner that, in comparing the vehicle having the selected specification or configuration and a vehicle having another specification or configuration, a difference in estimated price calculated by the estimated price calculating means corresponds to a difference in specification or configuration between these vehicles.

In this manner, the estimated price to be provided to the customer can be set to an appropriate price corresponding to a difference in specification or configuration as described above so that the overall effectiveness of the system is improved.

According to the invention there is provided a vehicle sales support or configuration program for controlling a vehicle sales support or configuration apparatus for supporting vehicle sales to customers or vehicle configuration by customers online by allowing a customer to select, via communications lines, a preferred specification or configuration from a plurality of different specifications or configurations set with respect to a vehicle and sending, to the customer, an estimated price, which is set by a distributor specified by the customer among a plurality of distributors, of a selectively specified or configured vehicle having the selected specification or configuration.

The vehicle sales support apparatus includes a manufacturer recommended retail price database for storing data for enabling calculation of manufacturer recommended retail prices of vehicles respectively having the plurality of specifications or configurations; an estimated price database for storing calculation data for enabling calculation of estimated prices, set by each of the plurality of distributors, of the vehicles respectively having the plurality of specifications or configurations; and a reference information database for storing prescribed data necessary for correcting the calculation data stored in the estimated price database.

The vehicle sales support program of the invention makes the vehicle sales support or configuration apparatus particularly execute the following:

A specification or configuration selecting step of allowing the customer to selectively input a desired specification or configuration with the plurality of specifications or configurations of the vehicle presented, setting the selectively input specification or configuration as the selected specification or configuration of the selectively specified or configured vehicle, calculating a manufacturer recommended retail price of the selectively specified or configured vehicle on the basis of the data stored in the manufacturer recommended retail price database, and providing the calculated manufacturer recommended retail price to the customer; a distributor specifying step of allowing the customer to specify and input a desired distributor with the plurality of distributors presented, and setting the input distributor as a specified distributor; an estimated price calculating step of calculating, in response to an estimate request input by the customer, an estimated price, which is set by the specified distributor set in the distributor specifying step, of the selectively specified or configured vehicle selected in the specification or configuration selecting step on the basis of the calculation data stored in the estimated price database; an estimated price providing step of providing the estimated price calculated in the estimated price calculating step to the customer or providing the estimated price and information of the selected specification or configuration to the specified distributor; and an updating step of correcting the calculation data set by each distributor stored in the estimated price database on the basis of the prescribed data stored in the reference information database, and updating the estimated price database on the basis of the corrected calculation data.

The vehicle sales support or configuration program further according to the invention makes a vehicle sales support or configuration apparatus, which includes the manufacturer recommended retail price database; the estimated price database; and a reference information database for storing prescribed data necessary for correcting the estimated prices calculated on the basis of the calculation data stored in the estimated price database, execute the following:

A specification or configuration selecting step of allowing the customer to selectively input a desired specification or configuration with the plurality of specifications or configurations of the vehicle presented, setting the selectively input specification or configuration as the selected specification or configuration of the selectively specified vehicle, calculating a manufacturer recommended retail price of the selectively specified or configured vehicle on the basis of the data stored in the manufacturer recommended retail price database, and providing the calculated manufacturer recommended retail price to the customer; a distributor specifying step of allowing the customer to specify and input a desired distributor with the plurality of distributors presented, and setting the input distributor as a specified distributor; an estimated price calculating step of calculating, in response to an estimate request input by the customer, an estimated price, which is set by the specified distributor set in the distributor specifying step, of the selectively specified or configured vehicle set in the specification or configuration selecting step on the basis of the calculation data stored in the estimated price database; a correcting step of correcting the estimated price calculated in the estimated price calculating step on the basis of the prescribed data stored in the reference information database; and an estimated price providing step of providing the estimated price corrected in the correcting step to the customer or providing the estimated price corrected in the correcting step and information of the selected specification to the specified distributor.

According to a preferred embodiment, the prescribed data stored in the reference information database corresponds to a sales start time of the vehicle, and in the updating step, the calculation data set by each distributor and stored in the estimated price database is corrected on the basis of elapsed time from the sales start time of the vehicle in a manner that the estimated prices of the vehicles respectively having the plurality of specifications or configurations calculated in the estimated price calculating step are lower as the elapsed time is longer. Preferably, the prescribed data stored in the reference information database corresponds to a sales start time of the vehicle, and in the correcting step, the estimated price calculated in the estimated price calculating step is corrected on the basis of elapsed time from the sales start time of the vehicle to be lower as the elapsed time is longer.

Further preferably, the prescribed data stored in the reference information database corresponds to an estimated price of a vehicle already provided to the customer and a lower limit estimated price set by each distributor with respect to each of the plurality of specifications or configurations, and when it is found based on the prescribed information that the customer having input the estimate request is already provided with an estimated price of a vehicle having a specification or configuration identical to the selected specification or configuration related to the estimate request, the estimated price of the selectively specified or configured vehicle calculated in the estimated price calculating step is corrected, in the correcting step, to be lower than the already provided estimated price by a given value and to be higher than the lower limit estimated price of the selected specification. Accordingly, the overall effectiveness and speed of the system can be improved. Preferably, when the estimated price already provided to the customer having input the estimate request is provided by the specified distributor related to the estimate request, the estimated price calculated in the estimated price calculating step is inhibited from being corrected in the correcting step. Further preferably, the vehicle sales support apparatus is further made to execute a lower limit modifying step of modifying the lower limit estimated price of each specification stored in the reference information database with respect to each distributor, and in the lower limit modifying step, on the basis of the elapsed time from the sales start time of the vehicle, the lower limit estimated price of each specification is lowered as the elapsed time is longer. According to a further preferred embodiment, in the estimated price providing step, the specified distributor is allowed to input an estimated price of the selectively specified or configured vehicle with the estimated price and the information of the selected specification or configuration presented, and the input estimated price is provided to the customer.

Preferably, the prescribed data stored in the reference information database corresponds to data regarding correlation between a specification or configuration and a price of the vehicle, and in the updating step, the calculation data set by each distributor and stored in the estimated price database is corrected in a manner that, in comparing a vehicle having a given specification or configuration with a vehicle having another specification or configuration, a difference in estimated price calculated by in estimated price calculating step corresponds to a difference in specification or configuration between these vehicles. Preferably, the prescribed data stored in the reference information database corresponds to data regarding correlation between a specification or configuration and a price of the vehicle, and in the correcting step, the estimated price is corrected in a manner that, in comparing the vehicle having the selected specification or configuration and a vehicle having another specification or configuration, a difference in estimated price calculated in the estimated price calculating step corresponds to a difference in specification or configuration between these vehicles. According to the invention there is further provided a vehicle sales support or configuration method for supporting vehicle sales to customers or vehicle configuration by customers online by allowing a customer to select, via communications lines, a preferred specification or configuration from a plurality of different specifications or configurations set with respect to a vehicle and sending, to the customer, an estimated price, which is set by a distributor specified by the customer among a plurality of distributors, of a selectively specified or configured vehicle having the selected specification or configuration.

The vehicle sales support method of the invention uses a manufacturer recommended retail price database for storing data for enabling calculation of manufacturer recommended retail prices of vehicles respectively having the plurality of specifications or configurations; an estimated price database for storing calculation data for enabling calculation of estimated prices, set by each of the plurality of distributors, of the vehicles respectively having the plurality of specifications or configurations; and a reference information database for storing prescribed data necessary for correcting the calculation data stored in the estimated price database, and includes the following steps:

A specification or configuration selecting step of allowing the customer to selectively input a desired specification or configuration with the plurality of specifications or configurations of the vehicle presented, setting the selectively input specification or configuration as the selected specification of the selectively specified vehicle, calculating a manufacturer recommended retail price of the selectively specified or configured vehicle on the basis of the data stored in the manufacturer recommended retail price database, and providing the calculated manufacturer recommended retail price to the customer; a distributor specifying step of allowing the customer to specify and input a desired distributor with the plurality of distributors presented, and setting the input distributor as a specified distributor; an estimated price calculating step of calculating, in response to an estimate request input by the customer, an estimated price, which is set by the specified distributor set in the distributor specifying step, of the selectively specified or configured vehicle set in the specification or configuration selecting step on the basis of the calculation data stored in the estimated price database; an estimated price providing step of providing the estimated price calculated in the estimated price calculating step to the customer or providing the estimated price and information of the selected specification or configuration to the specified distributor; and an updating step of correcting the calculation data set by each distributor stored in the estimated price database on the basis of the prescribed data stored in the reference information database, and updating the estimated price database on the basis of the corrected calculation data. Accordingly, the efficiency in the configuration of the vehicle by the customer and in the sales business operation of the distributor can be improved. Moreover, a process of selection of a vehicle specification or configuration by a customer and of computation of a corresponding price preferably along with a comparision of prices can be effectively automatically performed.

The vehicle sales support method further according to the invention, which uses the manufacturer recommended retail price database; the estimated price database; and a reference information database for storing prescribed data necessary for correcting the estimated prices calculated on the basis of the calculation data stored in the estimated price database, includes the following steps:

A specification or configuration selecting step of allowing the customer to selectively input a desired specification or configuration with the plurality of specifications or configurations of the vehicle presented, setting the selectively input specification or configuration as the selected specification or configuration of the selectively specified vehicle, calculating a manufacturer recommended retail price of the selectively specified or configured vehicle on the basis of the data stored in the manufacturer recommended retail price database, and providing the calculated manufacturer recommended retail price to the customer; a distributor specifying step of allowing the customer to specify and input a desired distributor with the plurality of distributors presented, and setting the input distributor as a specified distributor; an estimated price calculating step of calculating, in response to an estimate request input by the customer, an estimated price, which is set by the specified distributor set in the distributor specifying step, of the selectively specified or configured vehicle set in the specification or configuration selecting step on the basis of the calculation data stored in the estimated price database; a correcting step of correcting the estimated price calculated in the estimated price calculating step on the basis of the prescribed data stored in the reference information database; and an estimated price providing step of providing the estimated price corrected in the correcting step to the customer or providing the estimated price corrected in the correcting step and information of the selected specification or configuration to the specified distributor. As a result, as described above, an automatization is possible and contemporarily each distributor minimally loses an opportunity of negotiations and each customer can get an estimated price appropriate according to the market price online and automatically. According to a preferred embodiment of the invention, the prescribed data stored in the reference information database corresponds to a sales start time of the vehicle, and in the updating step, the calculation data set by each distributor and stored in the estimated price database is corrected on the basis of elapsed time from the sales start time of the vehicle in a manner that the estimated prices of the vehicles respectively having the plurality of specifications or configurations calculated in the estimated price calculating step are lower as the elapsed time is longer.

Preferably, the prescribed data stored in the reference information database corresponds to a sales start time of the vehicle, and in the correcting step, the estimated price calculated in the estimated price calculating step is corrected on the basis of elapsed time from the sales start time of the vehicle to be lower as the elapsed time is longer.

Further preferably, the prescribed data stored in the reference information database corresponds to an estimated price of a vehicle already provided to the customer and a lower limit estimated price set by each distributor with respect to each of the plurality of specifications or configurations, and when it is found based on the prescribed information that the customer having input the estimate request is already provided with an estimated price of a vehicle having a specification or configuration identical to the selected specification or configuration related to the estimate request, the estimated price of the selectively specified or configured vehicle calculated in the estimated price calculating step is corrected, in the correcting step, to be lower than the already provided estimated price by a given value and to be higher than the lower limit estimated price of the selected specification or configuration. Preferably, when the estimated price already provided to the customer having input the estimate request is provided by the specified distributor related to the estimate request, the estimated price calculated in the estimated price calculating step is inhibited from being corrected in the correcting step. Further preferably, the vehicle sales support or configuration method further includes a lower limit modifying step of modifying the lower limit estimated price of each specification or configuration stored in the reference information database with respect to each distributor, and in the lower limit modifying step, on the basis of the elapsed time from the sales start time of the vehicle, the lower limit estimated price of each specification is lowered as the elapsed time is longer. Preferably, in the estimated price providing step, the specified distributor is allowed to input an estimated price of the selectively specified vehicle with the estimated price and the information of the selected specification or configuration presented, and the input estimated price is provided to the customer. Further preferably, the prescribed data stored in the reference information database corresponds to data regarding correlation between a specification and a price of the vehicle, and in the updating step, the calculation data set by each distributor and stored in the estimated price database is corrected in a manner that, in comparing a vehicle having a given specification or configuration with a vehicle having another specification or configuration, a difference in estimated price calculated in the estimated price calculating step corresponds to a difference in specification or configuration between these vehicles. Still further preferably, the prescribed data stored in the reference information database corresponds to data regarding correlation between a specification and a price of the vehicle, and in the correcting step, the estimated price is corrected in a manner that, in comparing the vehicle having the selected specification and a vehicle having another specification, a difference in estimated price calculated in the estimated price calculating step corresponds to a difference in specification or configuration between these vehicles.

### BRIEF DESCRIPTION OF THE DRAWINGS

FIG. **1** is a conceptual diagram for showing the whole structure of a customized vehicle estimate/order or configuration system;
FIG. **2** is a block diagram for showing an exemplified internal structure of a manufacturer server, a distributor server or a user terminal;
FIG. **3** is a diagram for showing a functional architecture of processing modules executed in the customized vehicle estimate/order or configuration system;
FIG. **4** is a diagram for showing transition of display windows in initial processing (M1) and vehicle specification or configuration selection processing (M2);
FIG. **5** is a diagram for showing transition of display windows in estimate/assessment request processing (M3) and an e-mail sending function involved in estimate/assessment request;
FIG. **6** is a diagram for showing transition of display windows in estimate items confirmation processing (M4);
FIG. **7** is a diagram for showing transition of display windows in negotiation application processing (M5) and an e-mail sending function involved in negotiation application;
FIG. **8** is a flowchart for showing entire rough procedures of principal processing executed by the manufacturer server;
FIG. **9** is a flowchart of the vehicle specification selection or configuration processing (M2) executed by the manufacturer server;
FIG. **10** is a flowchart of the estimate/assessment request processing (M3) executed by the manufacturer server;
FIG. **11** is a flowchart of the estimate items confirmation processing (M4) executed by the manufacturer server;
FIG. **12** is a flowchart of estimated price providing processing according to Embodiment 1 of the invention;
FIG. **13** is a flowchart of an automatic estimated price correction subroutine;
FIG. **14** is a flowchart of a correction subroutine using access history;
FIG. **15** is a flowchart of update processing for an estimated price DB executed by the manufacturer server;
FIG. **16** is a flowchart of an automatic modification/update subroutine for the estimated price DB;
FIG. **17A** is a schematic diagram of an automatic modification/update map in accordance with time elapsed from sales start;
FIG. **17B** is a schematic diagram of an automatic modification/update map in accordance with remaining time until model change;
FIG. **17C** is a schematic diagram of an automatic modification/update map in accordance with an offline price;
FIG. **17D** is a schematic diagram of an automatic modification/update map in accordance with a negotiation ratio or the like;
FIG. **17E** is a schematic diagram of an automatic modification/update map in accordance with stock;
FIG. **17F** is a schematic diagram of an automatic modification/update map in accordance with discount financial funds per vehicle;
FIG. **17G** is a schematic diagram of an automatic modification/update map in accordance with a plan achievement ratio;
FIG. **18** is a flowchart of estimated price providing processing according to Modification 1 of Embodiment 1;
FIG. **19** is a flowchart of estimated price providing processing according to Embodiment 2;
FIG. **20** is a flowchart of a third automatic correction subroutine;
FIG. **21** is a flowchart of estimated price providing processing according to Modification 1 of Embodiment 2;
FIG. **22** is a diagram of an exemplified questionnaire input window;
FIG. **23** is a diagram of an exemplified top window **A-1** corresponding to a homepage window;
FIG. **24** is a diagram of an exemplified home window **A-2**;
FIG. **25** is a diagram of an exemplified format of vehicle specification or configuration selection windows (**B-1** through **B-15**) displayed in the vehicle specification or configuration selection processing (M2);
FIG. **26** is a diagram of an exemplified window of details of a manufacturer recommended retail price displayed when a "detail" button of FIG. **25** is operated;
FIG. **27** is a diagram of an exemplified selected specification or configuration display window **B-15** displayed in the vehicle specification selection or configuration processing (M2);
FIG. **28** is a diagram of an exemplified estimate request top window **C-1**;
FIG. **29** is a diagram of an exemplified assessment request input window **C-2**;
FIG. **30** is a diagram of an exemplified ID/password input window **D-1**;
FIG. **31** is a diagram of an exemplified purchase review information list window **D-2**;
FIG. **32** is a diagram of an exemplified estimate items confirmation window **D-3**;
FIG. **33** is a diagram of an exemplified negotiation application input window **F-1**;
FIG. **34** is a diagram of an exemplified specification selection or configuration initial window; and
FIG. **35** is a diagram of an exemplified warning window.

### DETAILED DESCRIPTION OF THE INVENTION

Now, preferred embodiments of the invention will be described with reference to the accompanying drawings. Herein, a customized vehicle means a vehicle having optional specification or configuration items determined, by utilizing a vehicle sales support or configuration system of the invention (which is designated as a customized vehicle estimate/order or configuration system in this embodiment), by a user (hereinafter sometimes referred to as a customer) selecting one of a plurality of optional specification or (technical) configuration items with respect to each of a plurality of items (such as an engine, transmission, tires, wheels and upholstery) on the basis of a standard vehicle (base vehicle) having a predetermined specification or (technical) configuration and equipment. In other words, different specifications or configurations in number corresponding to the number of combinations of the optional specification or configuration items of the plural items are set with respect to a vehicle sold by using the present system (namely, a vehicle whose specification or configuration can be selected by using the present system), and a customized vehicle corresponds to a vehicle having an optional specification or configuration selected from the plural specification or configuration items by a user.

### EMBODIMENT 1

### - Whole structure of hardware -

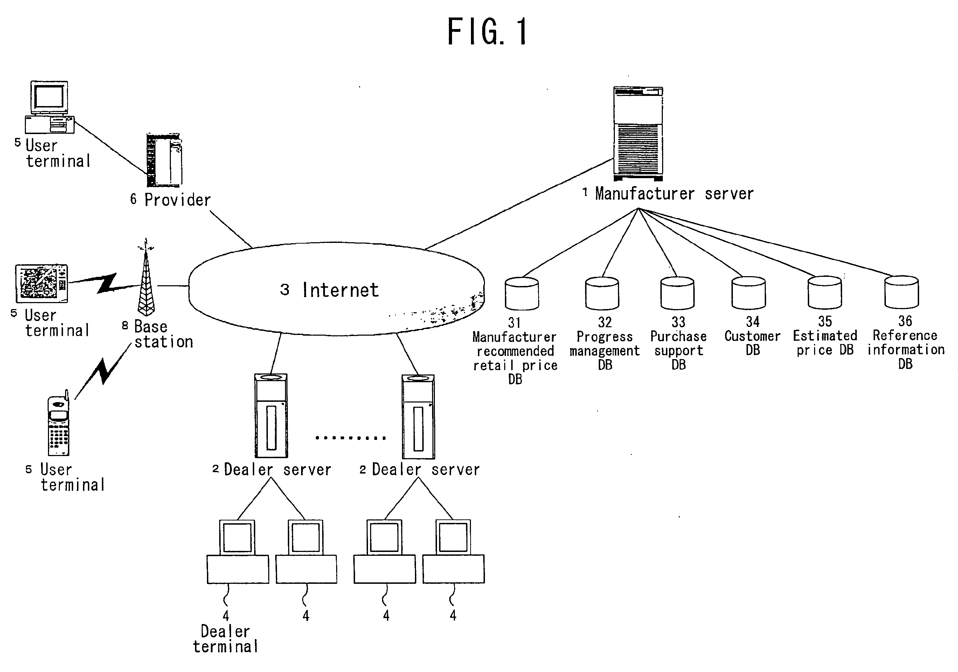

FIG. **1** is a conceptual diagram for showing the whole structure of the customized vehicle estimate/order system used for supporting vehicle sales to customers online.

In FIG. **1**, a reference numeral **1** denotes a server computer used by a manufacturer manufacturing a customized vehicle that is selected in the specification or configuration and is ordered by using the customized vehicle estimate/order system. This server computer **1** principally functions as an application server for a dealer terminal **4** or a user terminal **5** (that is a customer terminal operated by a customer) described below. This server computer may be installed in the manufacturer or operated outside the manufacturer by a third party for the manufacturer, and hereinafter, this server computer is designated as the manufacturer server.

The manufacturer server **1** includes a manufacturer recommended retail price database **31** (hereinafter, database is designated as DB for short), a progress management DB **32**, a purchase support DB **33**, a customer DB **34**, an estimated price DB **35**, and a reference information DB **36**, and can make an access by a general method to any of these DBs if necessary during its operation.

In the manufacturer recommended retail price DB **31**, data with which retail prices recommended by the manufacturer (namely, manufacture recommended retail prices) can be calculated are stored with respect to optional specification or configuration items selectable for a customized vehicle in association with identification information (customize numbers) for specifying the respective specifications or configurations. The manufacturer recommended retail price DB **31** may store a retail price of each vehicle or a retail price of each specification or configuration item.

In the progress management DB **32**, progress situations ranging from manufacture to delivery of customized vehicles ordered by using the present system, such as a stock situation, an assembly situation (manufacture situation) and a conveyance situation, are stored with respect to each customized vehicle. Also in this progress management DB **32**, a progress situation between presentation of an estimated price to entrance into negotiations/contract in the present system, and information of estimated prices (market prices) and the like presented to a user by each dealer (distributor) in a method other than that using the customized vehicle estimate/order system are stored with respect to each dealer. The contents of the progress management DB **32** are manually or automatically modified/updated in order.

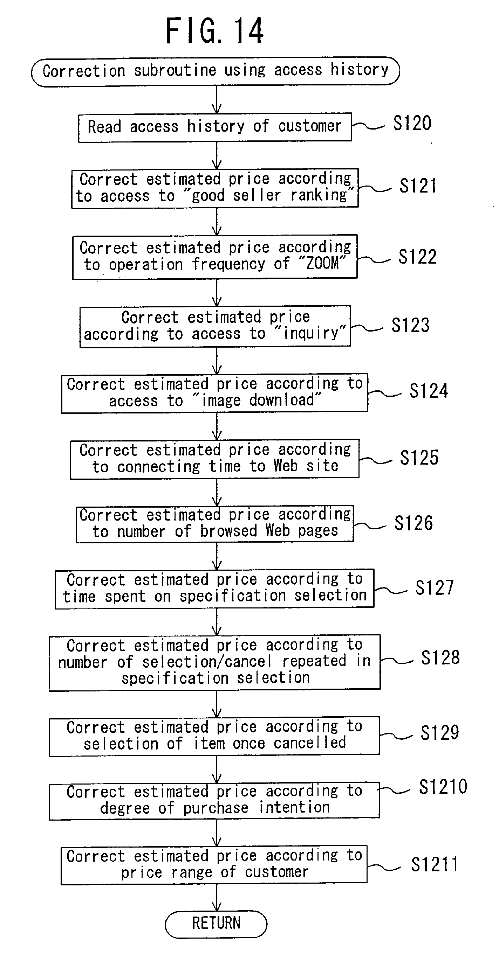

In the purchase support DB **33**, various windows (shown in FIGS. **14** through **27**) to be displayed on the user terminal **5** in the customized vehicle estimate/order system and information of vehicles having respective specifications or configurations (purchase support information) are stored.

In the customer DB **34**, information of a customized vehicle already selected by each user by using the present system, an estimated price of the customized vehicle presented to the user and assessment of a trade-in vehicle presented to the user are stored in association with a user ID issued to each user. Also, personal information (an address, an e-mail address and the like) input by each user in the present system, information obtained when the user previously purchased a vehicle (such as estimate information, time of purchase, a model type of purchased vehicle and the like), information of onerous service provided to the user by a dealer described below, and access history information of accesses made by the user online to the manufacturer server **1** for specification or configuration selection or an estimate request described later are also stored in association with the user ID.

In the estimated price DB **35**, data for enabling calculation of estimated prices to be presented to customers when vehicles having the respective specifications or configurations are sold by the dealer (distributor) (including the estimated prices themselves) are stored correspondingly to the respective specifications or configurations with respect to each dealer. In this embodiment, the estimated price of each specification or configuration set by each dealer is automatically modified/updated by the manufacturer server **1** in accordance with prescribed conditions.

Although every dealer can access to the data set by itself stored in the estimated price DB **35** and refer to the stored contents, the estimated price DB **35** is constructed so that data set by another dealer can be neither accessed nor referred to by employing a currently generally used security function in order to guarantee the autonomy and independency in the sales business operations of respective dealers.

In the reference information DB **36**, data necessary for correcting the data stored in the estimated price DB **35** is stored, The data stored in this reference information DB **36** will be described in detail later, one of which is a sales start time of a vehicle of each model. Also, data related to the correlation between each specification or configuration and a price of a vehicle is stored in the reference information DB **36**. Such data are appropriately corrected/modified by the manufacturer server **1**.

In FIG. **1**, a reference numeral **2** denotes a server computer installed in each of a plurality of dealers (distributors) for selling vehicles (hereinafter referred to as the dealer server). This server computer has a function as a server of a LAN (Local Area Network) constructed in each dealer, and the function as the server includes a function as a gateway for mutually connecting the LAN and internet **3** described below. Although the dealer is a distributor for selling vehicles in this embodiment, it may be a vehicle sales company, a shop of a vehicle sales company or a dealer in private capacity.

Also, a reference numeral **4** denotes a client computer installed in each dealer (which is designated as the dealer terminal as described above) and operated by a person in charge of the dealer. The dealer terminal **4** and the dealer server **2** together construct what is called a server-client environment in the LAN constructed in the dealer.

The dealer terminal **4** can make an access to the manufacturer server **1** through the dealer server **2** and the internet **3** if necessary during the operation thereof as described below. With the dealer terminal **4** thus connected to (logged in) the manufacturer server **1**, the dealer terminal **4** and the manufacturer server **1** together construct the so-called server-client environment.

A reference numeral **3** denotes the internet, that is, typical communications lines. A reference numeral **5** denotes a user terminal such as a personal computer, a portable information terminal and a cellular phone. The user terminal **5** is operated by a user of the present system, and may be installed in the user's house, carried by the user or installed in each dealer.

In this structure, the manufacturer server **1**, the dealer server **2**, the dealer terminal **4** and the user terminal **5** can perform two-way communications via the internet **3** by a general communication scheme for sending/receiving information on the estimate/order of a customized vehicle. At this point, in the case where the user terminal **5** is a personal computer, telephone lines and the like are also used via a provider (internet provider) **6**. Alternatively, in the case where the user terminal **5** is a portable information terminal or a cellular phone, public radio telephone lines and the like are also used via a base station **8**. Such communication means may adopt general arrangements and is herein not described in detail.

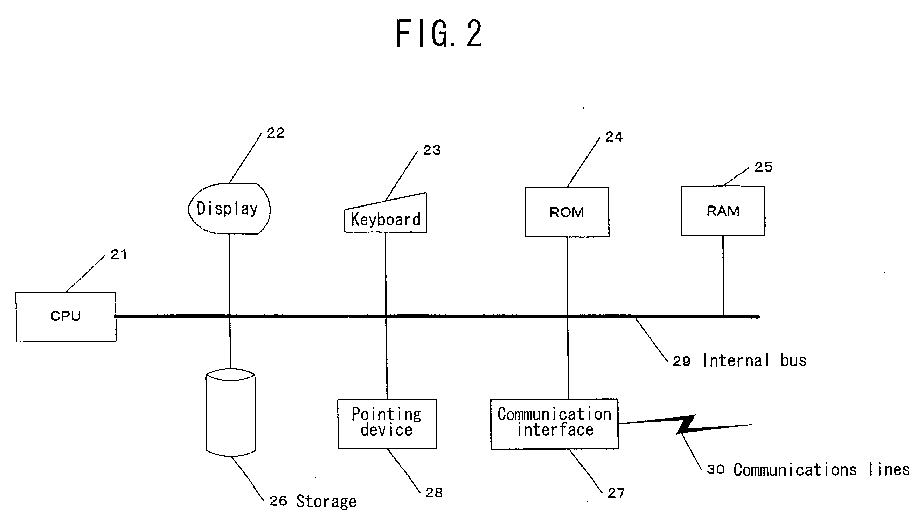

FIG. **2** is a block diagram for showing an exemplified internal structure of the manufacturer server **1**, the dealer server **2**, the dealer terminal **4** or the user terminal **5**.

In FIG. **2**, a reference numeral **22** denotes a display for displaying various windows such as a liquid crystal display device, and a reference numeral **23** denotes a keyboard, that is, input means. A reference numeral **24** denotes a ROM in which a boot program and the like are stored. A reference numeral **25** denotes a RAM for temporarily storing results of various processing. A reference numeral **26** denotes a storage, such as a hard disk drive (HDD), in which an information processing program and the like including the vehicle sales support program for operating the present system are stored. A reference numeral **27** denotes a communication interface used for communication with an external device via communications lines **30** (corresponding to the internet **3** and the like in this embodiment), which is a modem or a TA when the user terminal **5** is a personal computer and is a radio transmitter-receiver when the user terminal **5** is a portable information terminal or a cellular phone. A reference numeral **28** denotes a pointing device such as a mouse. These internal elements are connected to one another through an internal bus **29**, and a CPU (central processing unit) **21** controls the entire apparatus in accordance with the information processing program stored in the storage **26**. In this embodiment, the display **22**, the keyboard **23** and the pointing device **28** together provide what is called a man-machine interface to a user in each display window described later.

In this embodiment, each of the manufacturer server **1**, the dealer server **2**, the dealer terminal **4** and the user terminal **5** has software (a software program) of a general communication protocol capable of internet communications, an internet browsing function and a mailing function for sending/receiving data via the internet **3** in accordance with the software and general software for rendering a browser.

The CPU **21** appropriately executes these software, so that the manufacturer server **1** and the user terminal **5** or the dealer terminal **4** can together construct the so-called server-client environment with the user terminal **5** or the dealer terminal **4** connected to (logged in) the manufacturer server **1** via the internet **3**.

### - Functional architecture of customized vehicle estimate/order system -

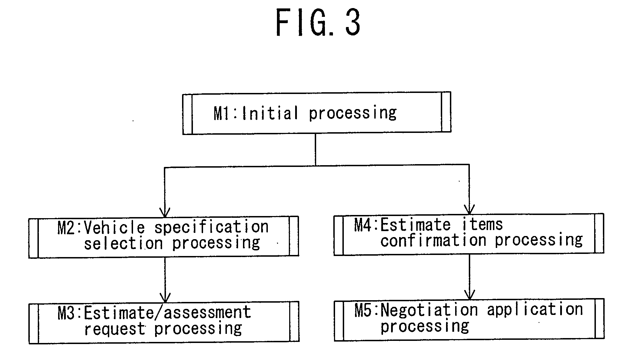

FIG. **3** is a diagram for showing the functional architecture of processing modules executed in the customized vehicle estimate/order system. Each block shown in this drawing corresponds to a unit of software (a software program) roughly divided depending upon a function described in detail below, executed by the CPU **21** of the manufacturer server **1**, and these functional units are designated as processing modules in this embodiment. These processing modules are previously stored in the storage **26** of the manufacturer server **1**. In other words, the storage **26** of the manufacturer server **1** is a recording medium in which the vehicle sales support program for operating the present system is recorded.

Now, the function of each processing module will be roughly described.
1. Initial processing (M1): A top window (homepage) of the customized vehicle estimate/order system is displayed in the user terminal **5**, and the top window can be transit to another window for selecting a specification or configuration of a customized vehicle or requesting for an estimate.
2. Vehicle specification or configuration selection processing (M2): An environment is provided to the user terminal **5**, in which a desired customized vehicle (a preferred specification or configuration) can be selected by the user operating the user terminal **5** by repeatedly selecting a desired one of choices previously prepared with respect to each of a plurality of items regarding a type of vehicle to be purchased. Furthermore, when the customized vehicle (selected specification or configuration) is determined, this processing can transit to estimate/assessment request processing (M3).
3. Estimate/assessment request processing (M3): If the user having determined the customized vehicle desires to get an estimated price of the customized vehicle, the user selects a preferred distributor to ask for estimate. The selected distributor is informed that it has been selected by the user and is provided with an environment in which estimate of the price of the customized vehicle and assessment of a trade-in vehicle can be requested.
4. Estimate items confirmation processing (M4): When the user operating the user terminal **5** has already been presented an estimated price of the customized vehicle whose specification or configuration has been determined, the user is provided with information such as change course of the estimated price up to the present time and a specification or configuration list. This processing can transit to a window for allowing the user to apply for negotiations.
5. Negotiation application processing (M5): When the user wants to enter into negotiations for actual purchase of the customized vehicle whose specification or configuration has been determined, this is informed of the dealer selected by the user.

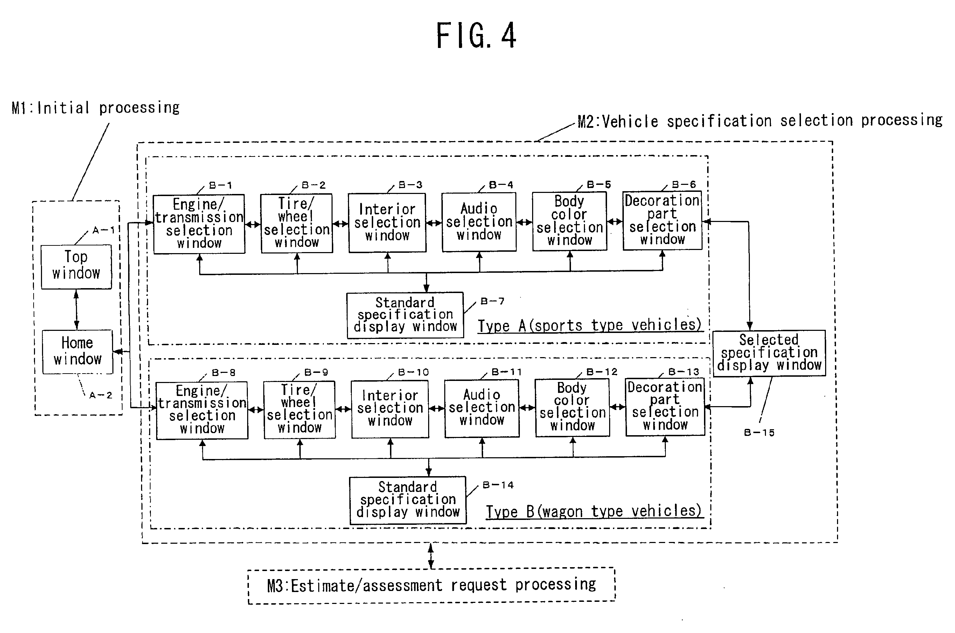

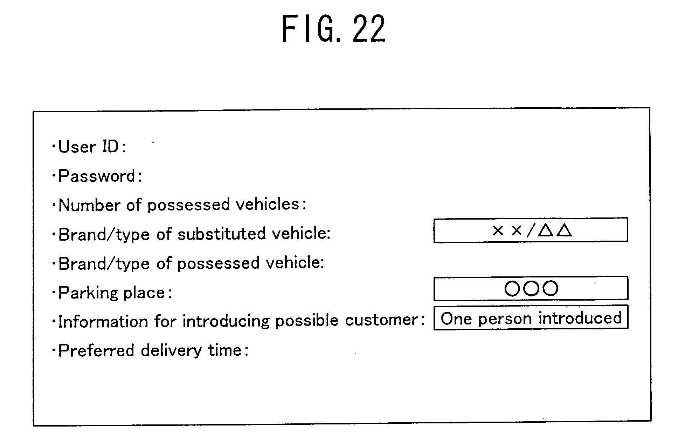

In the customized vehicle estimate/order system of this embodiment, when the processing modules described above are executed by the manufacturer server **1** with the browser program executed by the user terminal **5**, the user terminal **5** is linked to the customized vehicle estimate/order system as a client, so as to provide the man-machine interface by using display of a variety of windows as shown in FIGS. **4** through **7** (and FIGS. **22** through **35**) on the display **22** of the user terminal **5**. The user utilizes this man-machine interface, so as to select a specification or configuration and make an estimate request or an order of a desired customized vehicle by operating the user terminal **5**.

### - Software executed by manufacturer server 1 -

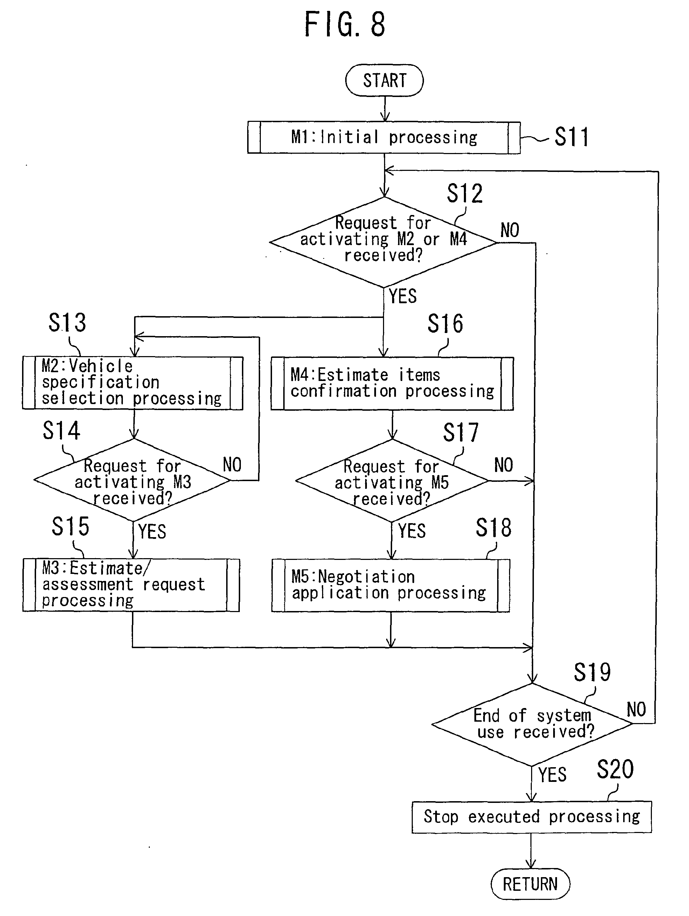

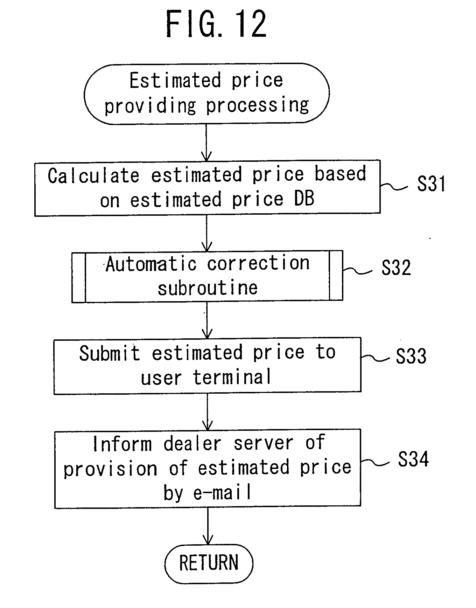

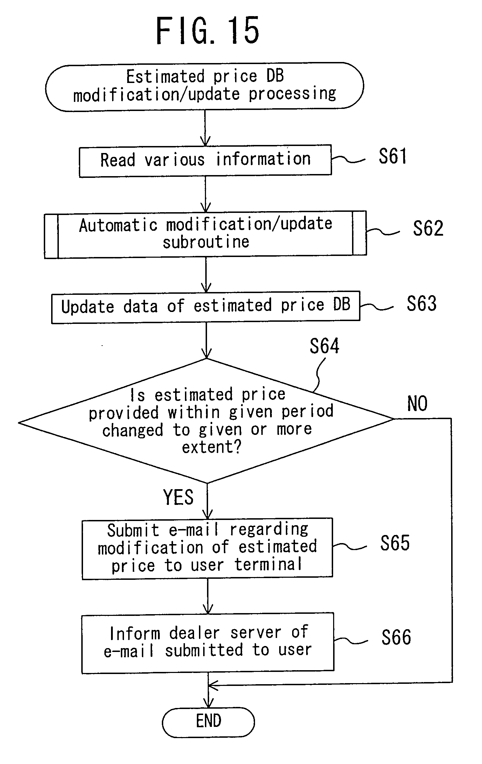

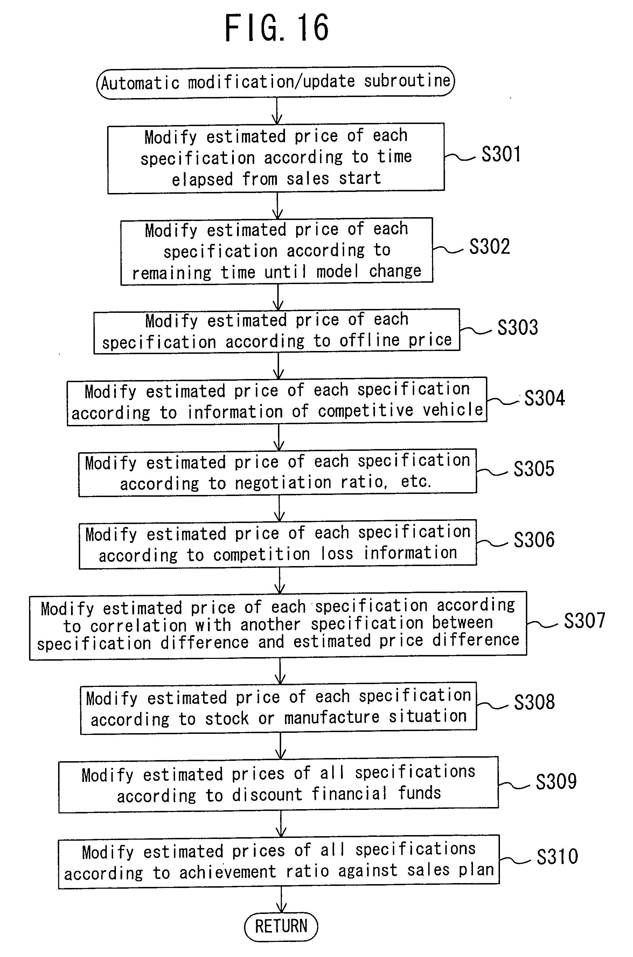

Now, the software executed by the CPU **21** of the manufacturer server **1** will be described. In the following, state transition between the respective processing modules will be first described with reference to a flowchart of FIG. **8** and transition of display windows in the respective processing modules will be described with reference to FIGS. **4** through **7**. Thereafter, estimated price providing processing will be described with reference to flowcharts shown in FIGS. **12** through **14** and modification/update processing for the estimated price DB **35** with reference to flowcharts shown in FIGS. **15** and **16**.

### (1) State transition between modules:

FIG. **8** is a flowchart for roughly showing the whole processing executed by the manufacturer server **1** in this embodiment.

Each of the processing modules M1 through M5 executed by the manufacturer server **1** has a function to display a variety of windows described below on the display **22** of the user terminal **5** and to realize an input operation in the displayed windows, and the transition of the display windows in the respective processing modules will be described later with reference to FIGS. **4** through **7**.

Referring to FIG. **8**, the processing modules are executed as follows:

Steps S11 and S12: When the user terminal **5** is linked to a Web site of the present system via the internet **3**, the initial processing (M1) is executed (step S11). During the execution, it is determined whether or not data for requesting activation of the vehicle specification or configuration selection processing (M2) or the estimate items confirmation processing (M4) is received from the user terminal **5** (step S12). When the data is received, the flow proceeds to step S13 or step S16 in accordance with the content of the data, and when not, the flow proceeds to step S19.

Steps S13 through S15: The vehicle specification or configuration selection processing (M2) is executed (step S13), and during the execution, it is determined whether or not data for requesting activation of the estimate/assessment request processing (M3) is received from the user terminal **5** (step S14). When the data is received, the estimate/assessment request processing (M3) is executed (step S15).

Steps S16 through S18: The estimate items confirmation processing (M4) is executed (step S16), and during the execution, it is determined whether or not data for requesting activation of the negotiation application processing (M5) is received from the user terminal **5** (step S17). When the data is received, the negotiation application processing (M5) is executed (Step S18).

Steps S19 and S20: During the execution of each processing module, it is determined whether or not data corresponding to the end of use of the present system is received from the user terminal **5** (step S19). When the data is received, the processing of the processing module currently executed is stopped (step S20), and when not, the flow returns to step S12.

### (2) Transition of display windows in each processing module:

Now, the transition of the display windows in each of the roughly divided five processing modules described above will be described with reference to FIGS. **4** through **7**. The relationship in the state transition between the processing modules each surrounded with a broken line block in FIGS. **4** through **7** accords with the functional architecture described with reference to FIG. **3**.

### <Initial processing (M1) and vehicle specification or configuration selection processing (M2)>

FIG. **4** is a diagram for showing the transition of the display windows in the initial processing (M1) and the vehicle specification or configuration selection processing (M2).

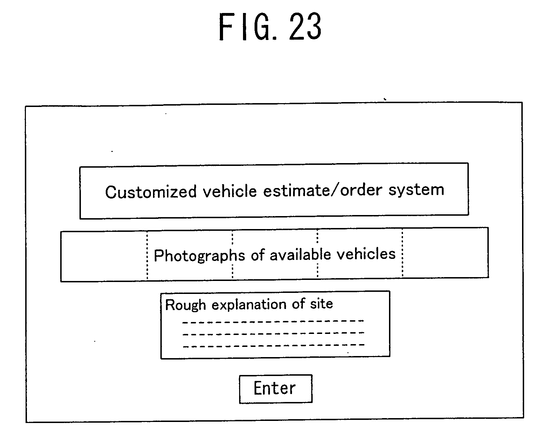

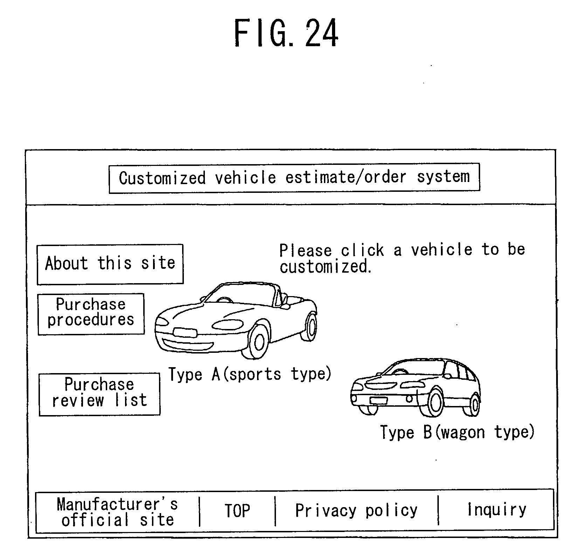

In FIG. **4**, the initial processing (M1) displays a top window **A-1** (shown in FIG. **23**) corresponding to the homepage window of the present system. The top window **A-1** exemplified in FIG. **23** includes an "enter" button to be operated by a user who desires to utilize the present system capable of specification or configuration selection, an estimate request and an order of a customized vehicle (namely, a user of the user terminal **5** linked to the manufacturer server **1** via the internet **3**). When the "enter" button is operated, the initial processing (M1) displays a home window **A-2** (shown in FIG. **24**) of the present system on the user terminal **5**.

FIG. **24** is a diagram for showing an example of the home window A-2 displayed by the initial processing (M1).

The display window shown in FIG. **24** includes a plurality of operation buttons, and when an operation button of "about this site" or "purchase procedures" is operated, a predetermined explanatory window is displayed on the user terminal **5**. Alternatively, when an operation button of "purchase review list" is operated, the function of the estimate items confirmation processing (M4) described later is provided to the user terminal **5**.

Also, in the home window **A-2**, a photograph of a type A, that is, sports type vehicles or a type B, that is, wagon type vehicles is clicked, the function of the vehicle specification or configuration selection processing (M2) is provided to the user terminal **5**. In this embodiment, specification or configuration items preferable for a user can be selected with respect to the type A of sports type vehicles and the type B of wagon type vehicles exemplified for the sake of simplification.

When a desired vehicle type is selected in the home window **A-2**, the user is allowed to select a preferred specification or configuration on the basis of a standard vehicle (base vehicle) of the selected vehicle type through the function of the vehicle specification or configuration selection processing (M2). In other words, the specification or configuration previously set as the standard vehicle in the present system can be replaced with another specification or configuration, or new equipment (optional equipment) not set in the standard vehicle can be added through the specification or configuration selection operation by the user.

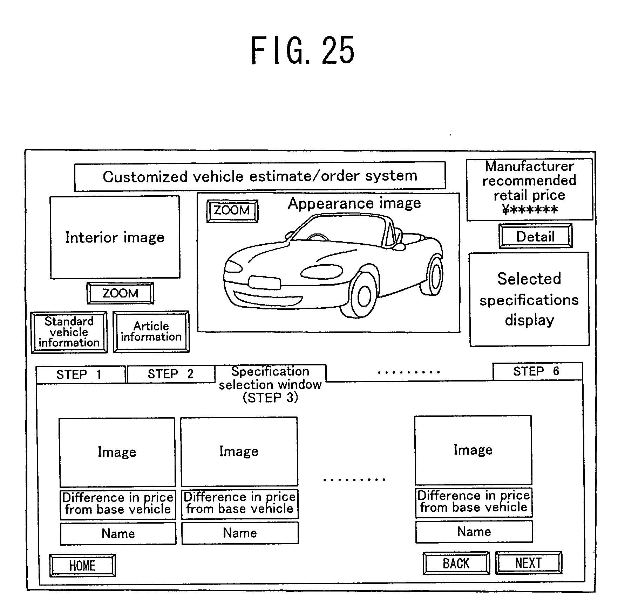

FIG. **25** is a diagram for showing an exemplified format of vehicle specification or configuration selection windows (**B-1** through **B-15**) to be displayed on the user terminal **5** by the vehicle specification or configuration selection processing (M2). The basic format of these windows is basically common to engine/transmission selection windows **B-1** and **B-8**, tire/wheel selection windows **B-2** and **B-9**, upholstery selection windows **B-3** and **B-10**, audio selection windows **B-4** and **B-11**, body color selection windows **B-5** and **B-12** and decoration part selection windows **B-6** and **B-13**.

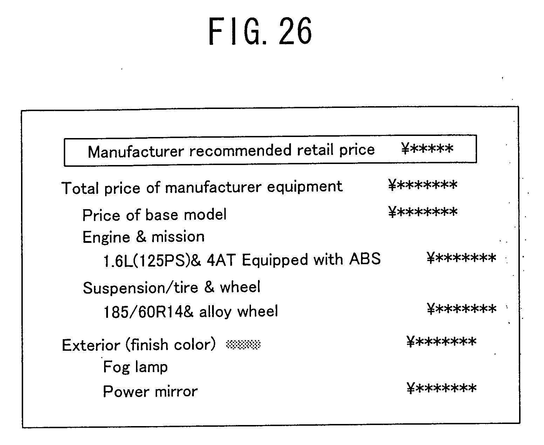

In an upper half area of each vehicle specification selection window, the followings are displayed: Photographs of appearance and upholstery of the customized vehicle selected by the user (purchase support information); a "ZOOM" button for expanding the photograph; an "article information" button for displaying various information (purchase support information) regarding the customized vehicle; a "standard vehicle information" button for displaying standard specification display window **B-7** or **B-14** including the specification and items of the standard vehicle corresponding to the base of the customized vehicle; a manufacturer recommended retail price of the customized vehicle (calculated on the basis of the data stored in the manufacturer recommended retail price DB **31**); a "detail" button for displaying the details of the manufacturer recommended retail price as exemplified in FIG. **26**; and details of the selected specification.

The purchase support information are selected from the data stored in the purchase support DB **33** correspondingly to the respective specifications and sent to the user terminal **5** by the manufacturer server **1**.

FIG. **26** is a diagram for showing an exemplified detail window of the manufacturer recommended retail price displayed when the "detail" button of FIG. **25** is operated. Thus, the manufacturer recommended retail price and prices of optional specification items selected in the respective items based on which the manufacturer recommended retail price is set are displayed.

Furthermore, in the vehicle specification or configuration selection processing (M2), the selection windows from **B-1** to **B-6** in this order, when the type A is selected, and the selection windows from **B-8** to **B-13** in this order, when the type B is selected, are displayed on the user terminal **5**. Therefore, the user is restricted to make selection in this order of display windows.

In a lower half area of each vehicle specification selection window, the selecting steps respectively corresponding to the windows **B-1** through **B-6** or **B-8** through **B-13** are displayed, for example, in the form of a plurality of overlapped folders.

In the exemplified window of FIG. **25**, the folder of the third step (namely, the upholstery selecting step) is selected to be displayed. In the selected folder (in an active state), selectable plural choices of the item to be selected by the user in the step are displayed in the forms of an image like a photograph, a price difference from that of the standard vehicle and a name (so that when an image of a preferred choice is clicked, the choice can be selected).

In a lowermost area of each vehicle specification selection window, a "HOME" button for jumping to the home window **A-2** (of FIG. **24**) and "BACK" and "NEXT" buttons for transiting to display windows before and behind are displayed.

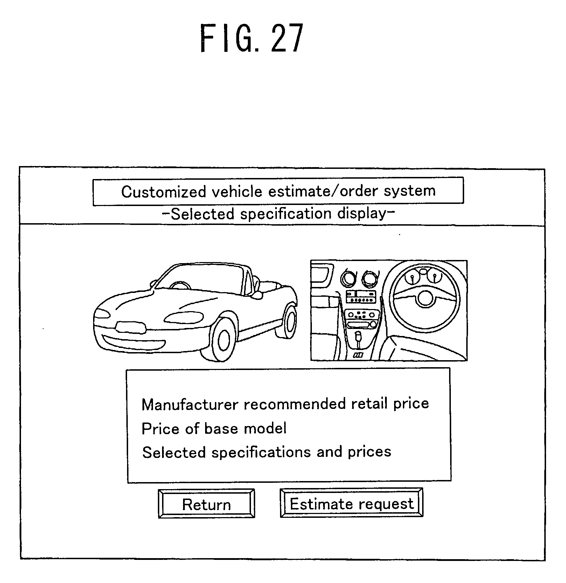

When the selection is completed about all the items (steps) in the vehicle specification or configuration selection processing (M2), a selected specification display window **B-15** of FIG. **27** is displayed on the user terminal **5**. When the selection is thus completed, identification information (customize number) of the customized vehicle of the user is determined.

FIG. **27** is a diagram for showing an example of the selected specification display window **B-15** displayed on the user terminal **5** in the vehicle specification or configuration selection processing (M2). In this selected specification display window **B-15**, for example, photograph images of the appearance and the upholstery of the customized vehicle whose specification has been selected, the manufacturer recommended retail price, the price of the standard vehicle, the selected specification items and the prices thereof are displayed. Also, an "estimate request" button for requesting for an estimate of the customized vehicle of one dealer selected by the user from a plurality of dealers (namely, a dealer of which the user desires to request for an estimate of the customized vehicle) is displayed.

When the "estimate request" button is operated for requesting for an estimate of the dealer in the selected specification display window **B-15**, the processing can transit to the estimate/assessment request processing (M3) described later. On the other hand, when a "return" button of the selected specification display window **B-15** is operated, the specification can be changed by successively returning to the vehicle specification selection windows respectively corresponding to the aforementioned steps.

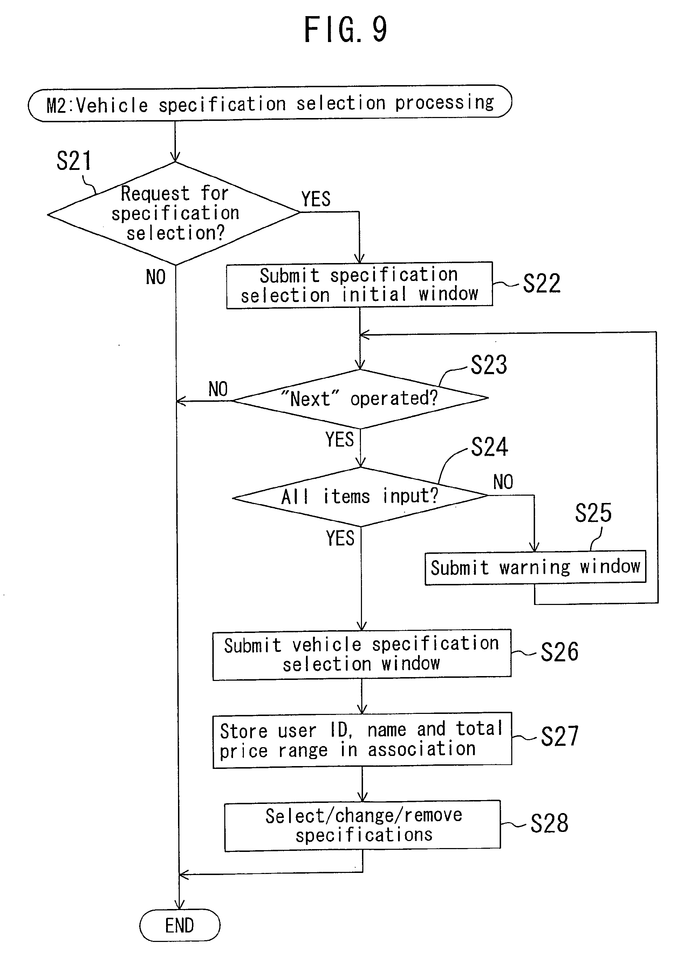

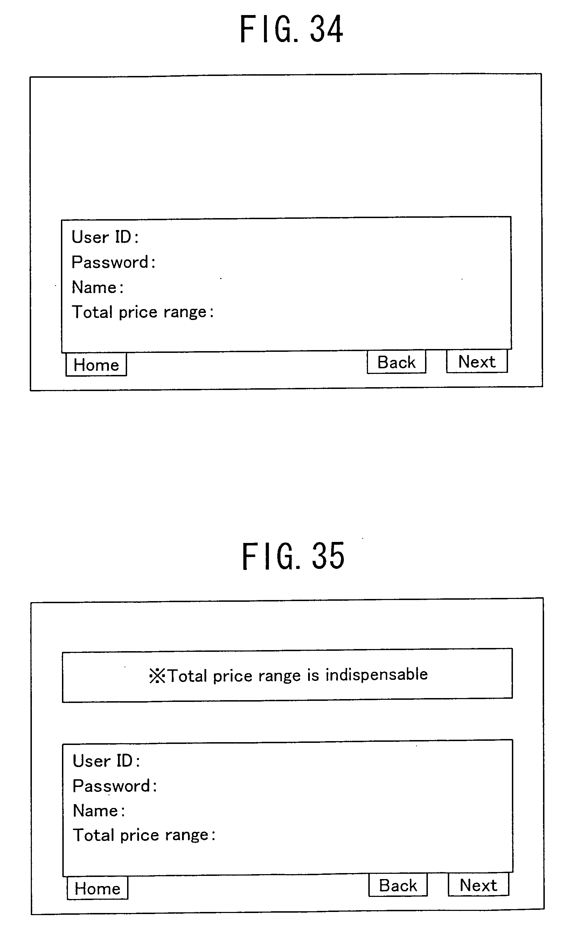

The vehicle specification or configuration selection processing (M2) will now be described with reference to a flowchart of FIG. **9**. First, in step S21, it is determined whether or not there is a specification or configuration selection request from the user terminal **5** (namely, whether or not a desired type (the type A or the type B) is selected in the home window **A-2**). When NO, namely, when there is not a specification selection request, the processing is ended. When YES, namely, when there is a specification selection request, the flow proceeds to step S22, where a specification selection initial window (which is omitted in FIG. **4**) as shown in FIG. **34** is sent to be displayed on the user terminal **5**. In the specification selection initial window, items to be input by the user, such as a user ID, a password, the name of the user and a total price range (preferred consumption price) planned for payment of the purchase are displayed.

Next, in step S23, it is determined whether or not a "Next" button of the specification selection initial window is operated. When NO, namely, when the "Next" button is not operated, the processing is ended. When YES, namely, when the "Next" button is operated, the flow proceeds to step S24, where it is determined whether or not all input items have been input in the specification selection initial window.

When NO in step S24, namely, when not all the input items have been input, the flow proceeds to step S25, where a warning window as shown in FIG. **35** is sent to be displayed on the user terminal **5** and then the flow returns to step S23. In this warning window, a warning that the item not input (that is, the "total price range" in FIG. **35**) is an indispensable item and the same input items as those of the specification selection initial window are displayed.

On the other hand, when YES in step S24, namely, when all the items have been input, the flow proceeds to step S26, where the vehicle specification selection window **B-1** or **B-8** is sent to be displayed on the user terminal **5**. In next step S27, the user ID, the name and the total price range input in the specification selection initial window are stored correspondingly to one another in the customer DB **34**. As described later, customer information in more detail is input by the user at the time of an estimate/assessment request, and these information are together stored in the customer DB **34**.

In next step S28, specification items are selected, changed or removed in accordance with the operation performed by the user thereafter, and then the processing is ended.

During the specification selection made by the user, a specification change history, an access history, a Web connecting time, the number of Web pages browsed and the like are stored in the customer DB **34** in association with the user ID and the like.

### <Estimate/assessment request processing (M3)>

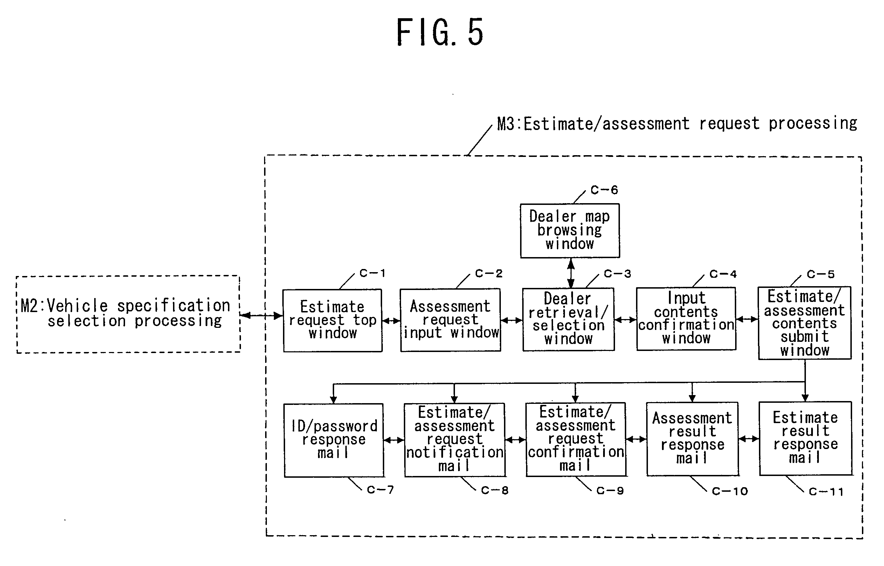

FIG. **5** is a diagram for showing the transition of display windows in the estimate/assessment request processing (M3) and an e-mail sending function involved in an estimate/assessment request. This processing is activated by operating the "estimate request" button after the specification selection of the customized vehicle in the vehicle specification or configuration selection processing (M2). The estimate/assessment request processing (M3) can be transit to the vehicle specification selection or configuration processing (M2) in accordance with the operation performed by the user.

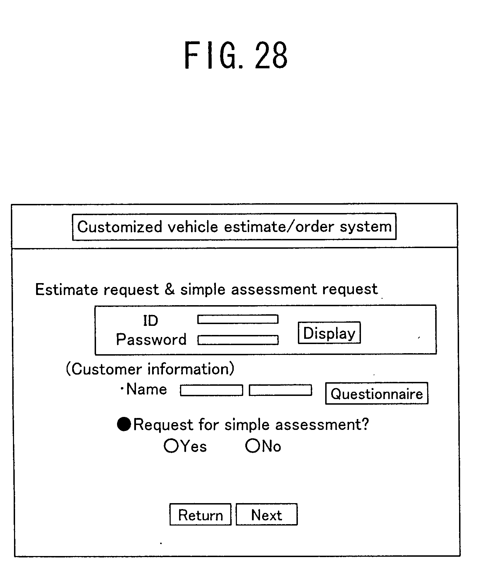

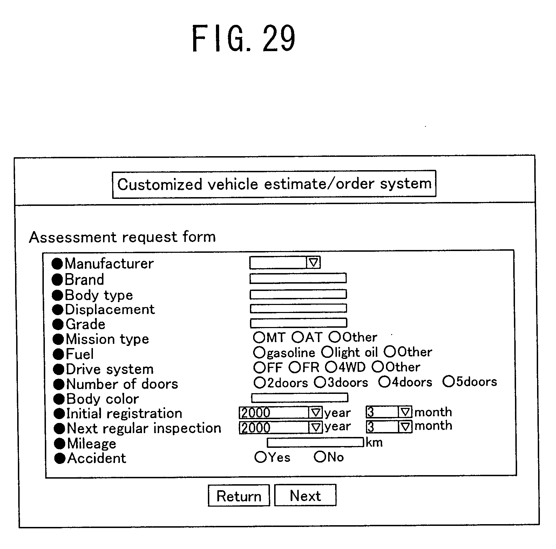

As shown in FIG. **5**, as display windows transit in the estimate/assessment request processing (M3), an estimate request top window **C-1** (shown in FIG. **28**), an assessment request input window **C-2** (shown in FIG. **29**), a dealer retrieval/selection window **C-3**, an input contents confirmation window **C-4**, an estimate/assessment contents submit window **C-5** and a dealer map browsing window **C-6** can be displayed on the user terminal **5**.

Estimate request top window **C-1** (shown in FIG. **28**): In this window, the user of the user terminal **5** inputs the following: The name of the user (the user ID and the password when already issued); and items of a questionnaire displayed in a questionnaire input window (shown in FIG. **22**) by operating a "questionnaire" button (which items include the number of vehicles possessed, a brand of vehicle to be substituted, a type of possessed vehicle, a type of parking place, information for introducing a possible customer, and a desired delivery time, and although not shown in FIG. **22**, a customer group of the user (selected from previously set groups such as a young family group) and a competitive vehicle the user regards competitive with the vehicle to be purchased). Thus, the user can request (demand) for an estimate of the customized vehicle previously determined in the vehicle specification or configuration selection processing (M2) of the dealer selected in the dealer retrieval/selection window **C-3** and for assessment of a trade-in vehicle if desired. In other words, after inputting the information related to the user in the estimate request top window **C-1**, when "YES" is selected with respect to an assessment request in the same window, the assessment request input window **C-2** is displayed, and when "NO" is selected, the dealer retrieval/selection window **C-3** is displayed.

Assessment request input window **C-2** (shown in FIG. **29**): In this window, the user of the user terminal **5** inputs predetermined specification items (such as the name of the manufacturer, the brand of the vehicle, the displacement and the mileage) of a vehicle to be trade-in (a trade-in vehicle), and when a "Next" button is selected, the dealer retrieval/selection window **C-3** is displayed.

Dealer retrieval/selection window **C-3** (not shown in any drawing): In this window, the user of the user terminal **5** can select and specify a dealer of which the user desires to request for an estimate of the customized vehicle and assessment of the trade-in vehicle by using the user terminal **5**. For specifying a dealer, for example, dealers in the neighborhood of the address of the user previously input in the estimate request top window **C-1** may be automatically presented, or a list of all the dealers may be displayed so that the user can select a desired one in the list. In either case, it is convenient for the user if the dealer map browsing window **C-6** in which the location of each dealer can be found on a map can be expanded from the dealer retrieval/selection window **C-3**.

When the dealer for asking for the estimate and the assessment of the trade-in vehicle is selected in the dealer retrieval/selection window **C-3** by the user, the input contents confirmation window **C-4** is displayed on the user terminal **5** of the user.

Input contents confirmation window **C-4** (not shown in any drawing): In this window, the following information are displayed in the form of a list: The contents of the specification of the customized vehicle previously determined in the vehicle specification selection processing (M2); the manufacturer recommended retail price; the contents of the items input by the user in the assessment request input window **C-2** if the assessment of a trade-in vehicle is selected; and information related to the dealer specified in the dealer retrieval/selection window **C-3** for requesting for the estimate/assessment. After the user confirms the contents of the information displayed in the input contents confirmation window **C-4**, when the user actually requests for the estimate/assessment through a predetermined operation, the operation signal is sent to the manufacturer server **1**, and the estimate/assessment contents submit window **C-5** is displayed on the user terminal **5**.

Estimate/assessment contents submit window **C-5** (not shown in any drawing): In this window, information that the estimate/assessment request is accepted by the manufacturer server **1** having received the estimate/assessment request (the operation signal) and that an e-mail regarding the request will be sent to the user from the dealer selected by the user are displayed. Thus, the estimate/assessment request processing (M3) includes a function to send/receive e-mails in response to the estimate/assessment request sent from the user terminal **5**.

ID/password reply mail **C-7**: When the estimate request thus sent from the user is the first request, an e-mail including issued ID and password is sent to the mail address previously input by the user.

Estimate/assessment request notification mail **C-8**: An e-mail is sent from the manufacturer server **1** to the dealer server **2** of the selected dealer to notify that the dealer is requested for the estimate of the customized vehicle (and the assessment of the trade-in vehicle) by the user. This e-mail includes, for example, information for specifying the user (such as the address, the name and the mail address) input in the estimate request top window **C-1**, the specification of the customized vehicle to be estimated, and the specification items of the trade-in vehicle input in the assessment request input window **C-2.**

Estimate/assessment request confirmation mail **C-9**: An e-mail is sent to the mail address previously input by the user from the dealer selected by the user for confirming the estimate/assessment request.

Assessment result response mail C-10: An e-mail for informing an assessment result is sent to the mail address previously input by the user from the dealer requested for the assessment of the trade-in vehicle by the user.

Estimate result response mail **C-11**: An e-mail for informing an estimate result (estimated price) that is set by the dealer requested for the estimate by the user is sent to the mail address previously input by the user from the manufacturer server **1**.

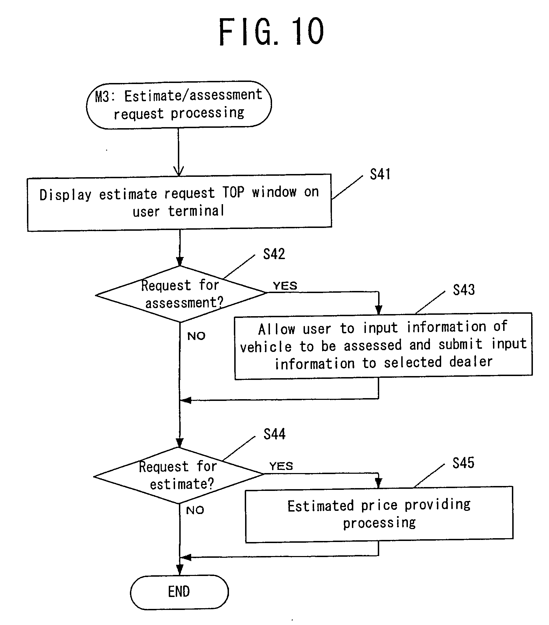

FIG. **10** is a flowchart of the estimate/assessment request processing (M3) executed by the manufacturer server **1**.

Referring to FIG. **10**, step **S41**: The estimate request top window **C-1** (shown in FIG. **28**) is displayed on the user terminal **5**, and validity of the user ID and the password input in this window is checked.

Steps S42 and S43: It is determined whether or not there is an assessment request (step S42). When there is not an assessment request, the flow proceeds to step S44. When there is an assessment request, the assessment request input window **C-2** (shown in FIG. **29**) is displayed on the user terminal **5**, so as to allow the user to input information of a trade-in vehicle desired to be assessed. Also, the dealer retrieval/selection window **C-3** is displayed on the user terminal **5**, so as to allow the user to select a desired dealer (distributor specifying means), and the input information is sent to the selected dealer by the estimate/assessment request notification mail **C-8** (step S43).

Steps S44 and S45: It is determined whether or not there is an estimate request (step S44). When there is an estimate request, the estimated price providing processing for providing an estimated price of the customized vehicle to the user terminal **5** from the manufacturer server **1** is performed (step S45). Specifically, the estimated price is automatically calculated on the basis of the identification information (customize number) of the customized vehicle set in the vehicle specification or configuration selection processing (M2), the calculated estimated price is corrected in accordance with customer information and the like, and the resultant is sent by e-mail to the mail address previously input by the user, which procedures will be described in detail later.

### <Estimate items confirmation processing (M4)>

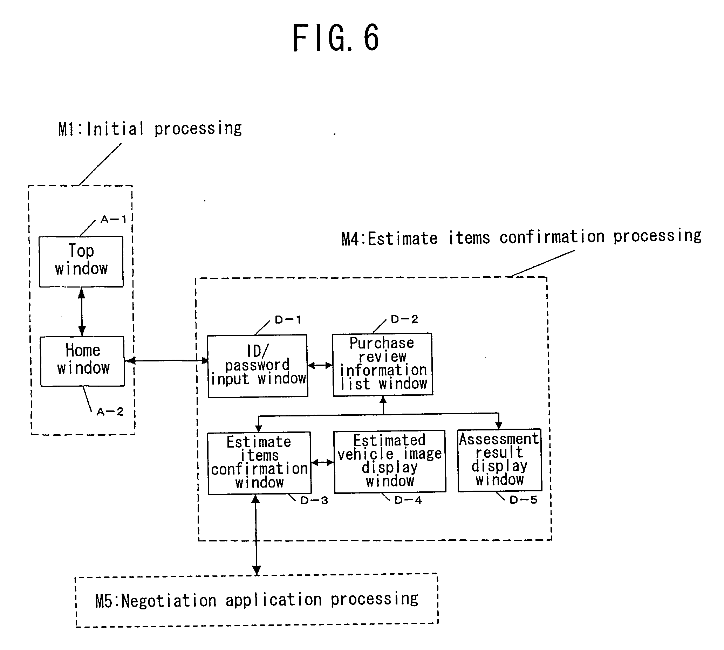

FIG. **6** is a diagram for showing transition of display windows in the estimate items confirmation processing (M4). This window is activated by operating the operation button of the "purchase review list" in the home window **A-2** displayed in the initial processing (M1). The estimate items confirmation processing (M4) can be transit to the initial processing (M1) or the negotiation application processing (M5) in accordance with the operation performed by the user.

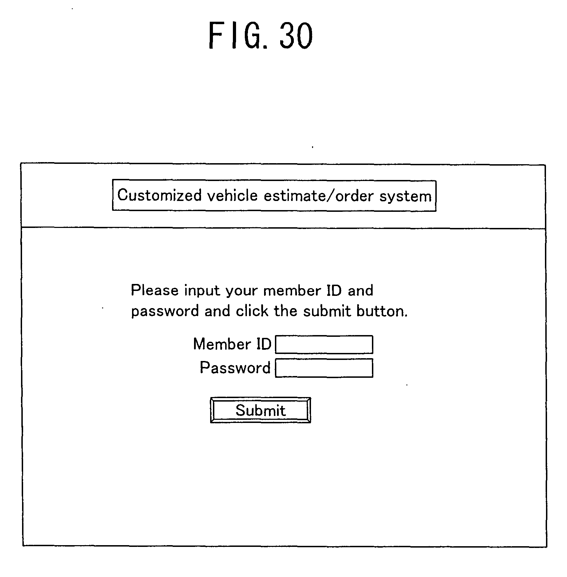

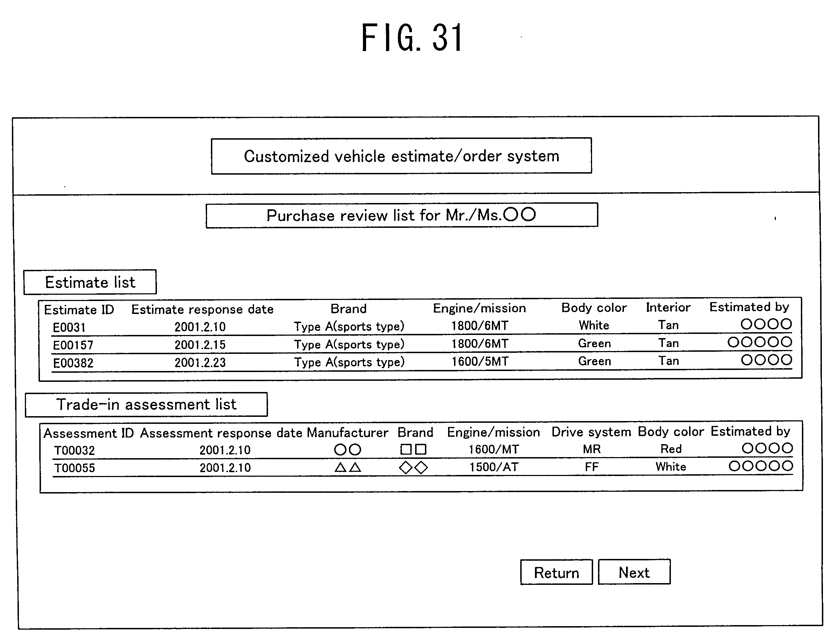

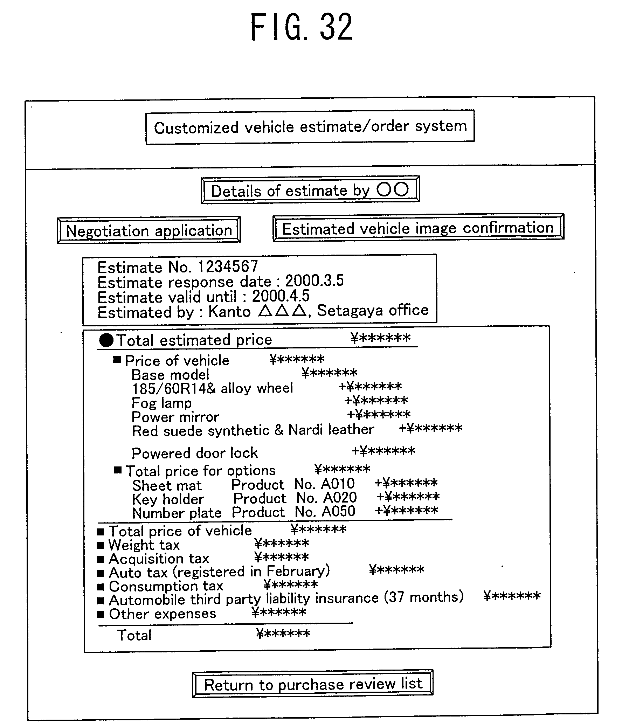

As shown in FIG. **6**, as display windows transit in the estimate items confirmation processing (M4), an ID/password input window **D-1** (shown in FIG. **30**), the purchase review information list window **D-2** (shown in FIG. **31**), an estimate items confirmation window **D-3** (shown in FIG. **32**), an estimated vehicle image display window D-4 and a trade-in assessment result display window **D-5** can be displayed on the user terminal **5**.

ID/password input window **D-1** (shown in FIG. **30**): In this window, the user inputs the user ID (member ID) and the password previously issued to the user and operates a "submit" button, so as to log in the present system (the vehicle manufacture server **1**). After completing logging in, the purchase review information list window **D-2** (shown in FIG. **31**) is displayed on the user terminal.

Purchase review information list window **D-2** (shown in FIG. **31**): In this window, a list of estimated prices of all customized vehicles selected by the user and the assessment result is displayed. When the user selects a desired item by clicking or the like, a window including the detailed contents of the selected item is displayed on the user terminal **5** of the user.

Estimate items confirmation window **D-3** (shown in FIG. **32**): In this window, the user can confirm the detailed contents of the estimate previously presented to the user. When a "negotiation application" button is operated, the processing can be transit to the negotiation application processing (M5). When an "estimated vehicle image confirmation" button is operated, the image of a vehicle corresponding to the currently displayed customized vehicle can be confirmed in the estimated vehicle image display window **D-4** (not shown in any drawing). When a "return to purchase review list" button is operated, the window can be transit to the purchase review information list window **D-2** (shown in FIG. **31**).

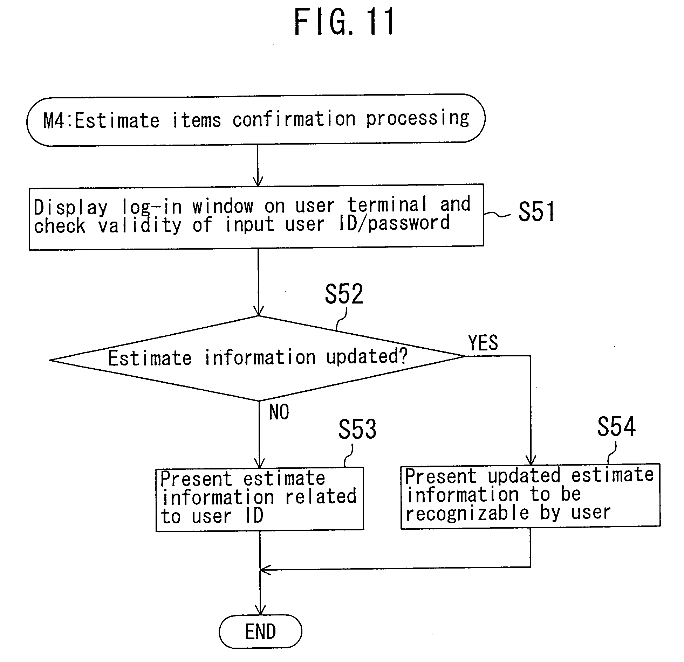

FIG. **11** is a flowchart for showing the estimate items confirmation processing (M4) executed by the manufacturer server **1**.

Referring to FIG. **11**, step S51: The log-in window, namely, the ID/password input window **D-1** (shown in FIG. **30**) is displayed on the user terminal **5**, and the validity of the user ID and the password input in the window is checked.

Step S52: Referring to the customer DB **34**, it is determined whether or not the estimate information related to the user ID has been updated.

Step S53: The estimate information related to the user ID stored in the customer DB **34** is fetched, and the fetched estimate information is displayed on the user terminal **5** of the user in the form of the purchase review information list window **D-2** (shown in FIG. **31**) or the estimate items confirmation window **D-3** (shown in FIG. **32**) in accordance with an operation performed in the purchase review information list window **D-2**.

Step S54: The updated estimate information related to the user ID stored in the customer DB **34** is displayed on the user terminal **5** of the user in the form of the purchase review information list window **D-2** (shown in FIG. **31**) or the estimate items confirmation window **D-3** (shown in FIG. **32**) in accordance with an operation performed in the purchase review information list window **D-2,** with the update recognizable by the user.

### <Negotiation application processing (M5)>

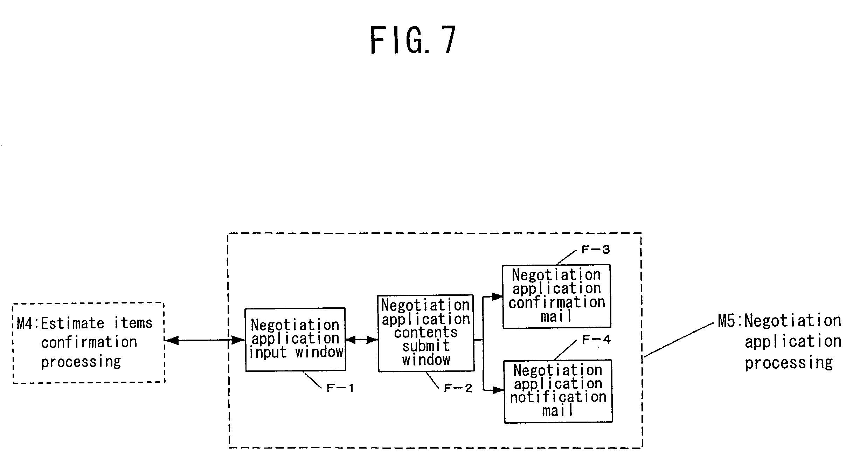

FIG. **7** is a diagram for showing transition of display windows in the negotiation application processing (M5) and an e-mail sending function involved in a negotiation application. The negotiation application processing (M5) is activated by operating the "negotiation application" button in the estimate items confirmation window **D-3** (shown in FIG. **32**). The negotiation application processing (M5) can be transit to the estimate items confirmation processing (M4).

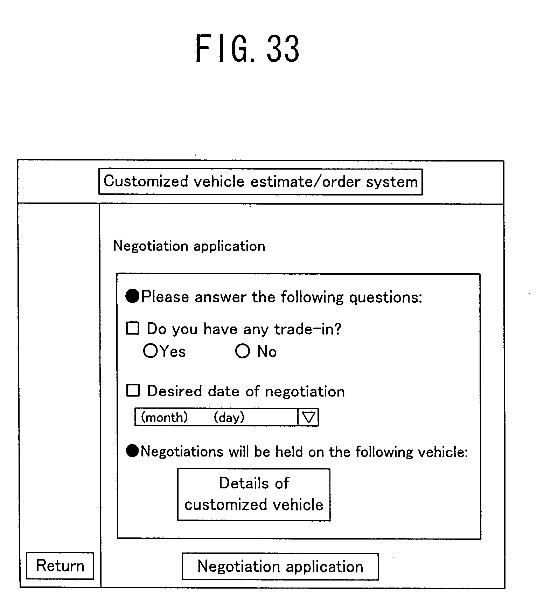

As display windows transit in the negotiation application processing (M5), a negotiation application input window **F-1** (shown in FIG. **33**) and a negotiation application contents submit window **F-2** can be displayed on the user terminal **5** of the user.

Negotiation application input window **F-1** (shown in FIG. **33**): In this window, the user can input various items (including whether or not the user has a trade-in vehicle and a desired date for the negotiations) for entering into negotiations with the dealer having presented the estimated price of the customized vehicle displayed in the estimate items confirmation window **D-3** (namely, the dealer selected by the user). After inputting the items, when a "negotiation application" button is operated, the negotiation application contents submit window **F-2** is displayed on the user terminal **5**.

Negotiation application contents submit window **F-2** (not shown in any drawing): In this window, information that the application contents input in the negotiation application input window **F-1** have been sent to and accepted by the manufacturer server **1** and that the selected dealer will contact the user about the negotiations by e-mail or telephone are displayed.

The negotiation application processing (M5) includes a function to send/receive e-mails in response to the negotiation application information sent in the negotiation application contents submit window **F-2** from the user terminal **5**.

Negotiation application confirmation mail **F-3**: An e-mail is sent from the manufacturer server **1** to the mail address previously input by the user for confirming that the negotiation application has been made.

Negotiation application notification mail **F-4**: An e-mail is sent from the manufacturer server **1** to the selected dealer for notifying that the negotiation application has been made by the user (negotiation application information). This e-mail includes the contents displayed in the negotiation application input window **F-1** and the information related to the user.

After the negotiations with the dealer, the customized vehicle can be actually ordered to the manufacturer by, for example, making an access to the manufacturer server **1** by using the dealer terminal **4** through the dealer server **2**, or by using separate dedicated communications lines from a dealer terminal different from that of the present system.

### (3) Estimated price providing processing:

The estimated price providing processing executed by the CPU of the manufacturer server **1** will be described with reference to FIGS. **12** through **14**. FIG. **12** is a flowchart for showing basic procedures in the estimated price providing processing for providing an estimated price automatically calculated on the basis of the identification information (customize number) of a customized vehicle.

Referring to FIG. **12**, step S31: The data set by the dealer specified by the customer is read from the estimated price DB **35**, and an estimated price corresponding to the identification information (customize number) of the customized vehicle selected in the aforementioned vehicle specification or configuration selection processing (M2) is calculated.

Step S32: The estimated price calculated in step S31 is subjected to an automatic correction subroutine for automatically correcting the estimated price in consideration of prescribed information regarding the customer. This automatic correction subroutine will be described in detail later.

Step S33: The estimated price having been corrected in step S32 is sent by e-mail to the mail address (the user terminal **5**) previously input by the customer and is stored in the customer DB **34** in association with the user ID. This e-mail includes a URL, and details of the estimated price can be confirmed in a window for displaying the estimate result by accessing a page specified by the URL by operating the user terminal **5**.

Step S34: An e-mail that the estimated price has been provided to the customer is sent to the dealer server **2**.

### - Automatic correction subroutine -

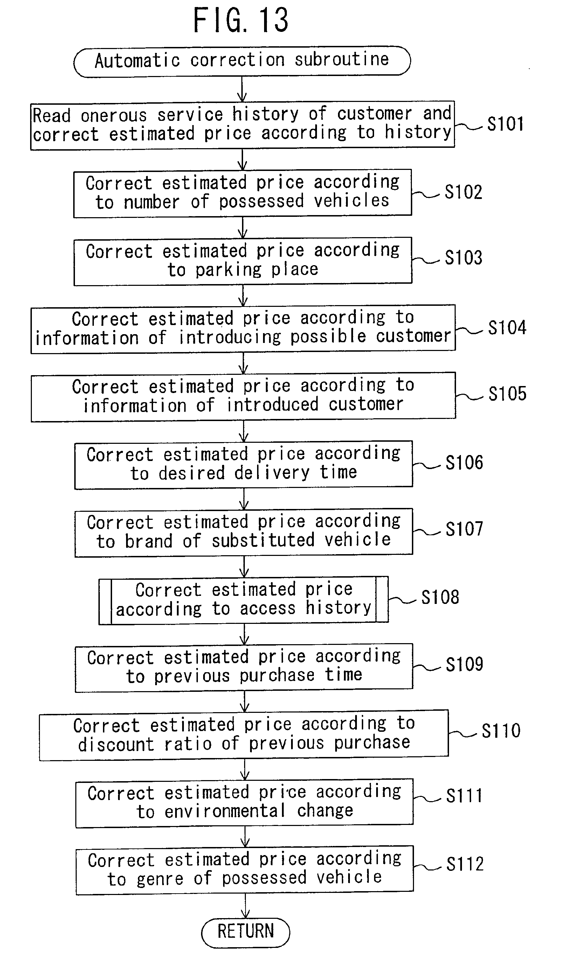

FIG. **13** shows specific procedures in the automatic correction subroutine performed in step S32 in the flow shown in FIG. **12**. In this subroutine, an estimated price read from the estimated price DB **35** is corrected on the basis of the prescribed information regarding the customer. The information based on which the correction operation is performed in steps described below is obtained by referring to the customer DB **34** or the information input by the customer in the predetermined input form of the questionnaire input window (shown in FIG. **22**) displayed in making the current estimate request.

Referring to FIG. **13**, step S101: Onerous service history of the customer is read, so as to correct the estimated price in accordance with the onerous service history. For example, as the sum of the onerous services provided within a predetermined period is larger, the estimated price is corrected to be gradually lower. At this point, among the onerous services, if a periodical inspection service has been provided, the discount resulting from this correction may be relatively increased, and if a service of unexpectedly repairing an old model vehicle has been provided, the discount may be relatively decreased. This is because a periodical inspection service can be expected to lead to the sales profit of the dealer.

Step S102: The number of vehicles currently possessed by the customer is read, so as to correct the estimated price in accordance with the number. For example, as the number of possessed vehicles is larger, the estimated price is corrected to be gradually lower. Also, when the customer possesses an old model vehicle, the discount resulting from this correction may be relatively increased. This is because, when the customer possesses a large number of vehicles including an old model vehicle, in particular, there is a high possibility of purchasing a new vehicle.

Step S103: The information related to the parking place of the customer is read, so as to correct the estimated price in accordance with the parking place. For example, when the parking place is a conspicuous place, the estimated price is corrected to be low. This is because, when the parking place is conspicuous, the advertising effectiveness can be expected. In this case, the discount resulting from this correction is preferably born by the manufacturer.

Step S104: The information for introducing a possible customer is read, so as to correct the estimated price in accordance with the information. For example, as the number of possible customers introduced is larger, the estimated price is corrected to be gradually lower. However, when an introduced possible customer is already a customer of the manufacturer, the discount resulting from this correction may be decreased or zero. Also, a sales promotion e-mail is sent to a possible customer thus introduced.

Step S105: Information whether or not this customer has been introduced by another customer is read, so as to correct the estimated price to be low when the customer has been introduced. Also, an e-mail that the introduced customer has requested for an estimate is sent to the customer having introduced the current customer.

Step S106: The desired delivery time input by the customer is read, so as to correct the estimated price in accordance with the desired delivery time. For example, as the desired delivery time is earlier, the estimated price is corrected to be gradually lower. This is because, when the desired delivery time is early, there is a high possibility that a contract can be made in a short time. At this point, the discount resulting from this correction may be relatively increased particularly when the end of the settlement term is close.

Step S107: The brand of the currently possessed vehicle to be substituted for the customized vehicle by the customer is read, so as to correct the estimated price in accordance with the brand. For example, when the vehicle to be substituted is a product of another manufacturer or the customer has no vehicle to be substituted, the estimated price is corrected to be low. This is because it is a good opportunity to get a new customer.

Step S108: The estimated price is corrected in accordance with the access history of the customer to the site of the present system for inputting the preferred specification or configuration. For example, in the case where the customer seems to be greatly interested in the customized vehicle, the estimated price is corrected to be low. The specific contents of this correction will be described in detail below.

Step S109: The time when the customer previously purchased a vehicle is read, so as to correct the estimated price to be low when, for example, the time of the previous purchase is before a predetermined period or when time until the next regular inspection of the previously purchased vehicle is short. This is because there is a high possibility of purchase in these cases. The discount resulting from this correction may be gradually modified in accordance with these times.

Step S110: A purchase price of the vehicle previously purchased by the customer is read, so as to correct the estimated price in accordance with the price. For example, as the discount ratio of the previous purchase is larger, the estimated price is set to be lower. This is for avoiding the estimated price from being largely exceeding a price presumed by the customer. The discount resulting from this correction is preferably determined on the basis of the deviation of the discount ratio of the previous purchase from an average discount ratio.

Step S111: Information of recent environmental change of the customer is read, so as to correct the estimated price in accordance with the information. The estimated price is corrected to be low when, for example, the size of family has been increased, the address has been changed or the occupation has been changed. In particular, when the type of the customized vehicle is selected properly in accordance with the environmental change, the discount resulting from this correction may be relatively increased. This applies, for example, to the case where a minivan is selected when the size of family has been increased.

Step S112: Information regarding the vehicle currently possessed by the customer is read, so as to correct the estimated price in accordance with the information. For example, when the genre of the customized vehicle is largely different from the genre of the type of vehicle currently possessed, the estimated price is corrected to be low. This is because, when the customer is interested in a type of vehicles of completely different genre from the currently possessed vehicle, there is a high possibility of negotiations or a contract.

The estimated price may be corrected by any of various methods other than those described in steps S101 through S112. For example, the estimated price may be corrected in accordance with the number of optional equipment selected by the customer for the customized vehicle related to the estimate request. Specifically, when the number of optional equipment is any of 4 through 9, the estimated price is corrected to be low. This is because, when the number of optional equipment is larger than a predetermined number, it seems that the customer is simply enjoying the specification or configuration selection, and on the contrary, when the number of optional equipment is smaller than a predetermined number, it seems that the customer is not highly interested in the customized vehicle. However, when the number of optional equipment is zero, the estimated price may be corrected to be low because it also seems that the customer has a definite specification desired to purchase.

### - Correction subroutine using access history -

Now, specific procedures in the correction using the access history performed in step S108 in the flow shown in FIG. **13** will be described with reference to FIG. **14**.

Referring to FIG. **14**, steps S120 and S121: The history of accesses made by the customer to the site of the present system is read from the customer DB **34**, and from the access history, information of accesses to a page of "good seller ranking" for showing the ranking of popular specifications or configurations is read, so as to correct the estimated price in accordance with this access information. For example, when the frequency of accesses made within a predetermined period is larger than given frequency, the estimated price is corrected to be low. At this point, the estimated price may be corrected to be lower as the access frequency is higher.

Step S122: Information of access to "ZOOM" made by the customer, namely, information of frequency of operating the "ZOOM" button, is read, so as to correct the estimated price in accordance with the information. For example, when the operation frequency within a predetermined period is larger than given frequency, the estimated price is corrected to be low. At this point, the estimated price may be corrected to be lower as the operation frequency is higher.

Step S123: Information of accesses to "inquiry" made by the customer regarding the vehicle, namely, information of frequency of operating the "inquiry" button, is read, so as to correct the estimated price in accordance with this information. For example, when the operation frequency within a predetermined period is larger than given frequency, the estimated price is corrected to be low. At this point, the estimated price may be corrected to be lower as the frequency is higher.

Step S124: Information of accesses to "image download" made by the customer, namely, information of frequency of downloading images from the site by the customer, is read, so as to correct the estimated price in accordance with this information. For example, when the frequency of download within a predetermined period is larger than given frequency, the estimated price is corrected to be low. At this point, the estimated price may be corrected to be lower as the frequency is higher.

Step S125: Information of connection to the site by the customer, such as a Web site connecting time and operation frequency of the "article information" button, is read, so as to correct the estimated price in accordance with this information. For example, when the Web site connecting time within a predetermined period is longer than a predetermined time, or when the operation frequency of the button is larger than given frequency, the estimated price is corrected to be low. At this point, the estimated price may be corrected to be lower as the connecting time is longer or the operation frequency of the button is higher.

Step S126: The number of pages browsed by the customer during the connection to the site is read, so as to correct the estimated price in accordance with the number of browsed pages. For example, when the number of browsed pages is larger than a predetermined number, the estimated price is corrected to be low. At this point, the estimated price may be corrected to be lower as the number of browsed pages is larger. Also, pages counted in this procedure may be limited particularly to pages regarding the specifications or configurations of the customized vehicle alone.

Step S127: History of specification or configuration selection previously made by the customer with respect to all customized vehicles selected by the customer is read, so as to correct the estimated price in accordance with this history. For example, when a total time spent on the specification or configuration selection within a predetermined period is longer than a predetermined time, the estimated price is corrected to be low. At this point, the estimated price may be corrected to be lower as the total time is longer. Alternatively, the specification or configuration selection history may be limited to that regarding customized vehicles having equivalent or similar specifications or configurations.

Step S128: History of specification selection previously made by the customer with respect to the customized vehicle is read, so as to correct the estimated price in accordance with the repeating number of selecting and canceling the choice of a specification or configuration item (equipment). For example, when selection and cancel was repeated twice or more, the estimated price is corrected to be low. When the customer repeatedly selects/cancels a specification or configuration item, it seems not only that the customer has a high degree of purchase intention for the vehicle but also that the customer is hesitating to select the specification item in consideration of the price range. Therefore, when the estimated price is corrected to be low in this case, the estimated price can be set to a price preferred by the customer. Also, since the correction is performed when the repeating number is 2 or more, the case where the customer simply made a mistake in selection input of a specification or configuration item can be omitted.

Step S129: The history of specification selection previously made by the customer with respect to the customized vehicle is read, so as to correct the estimated price to be low when a specification or configuration item once cancelled was selected again. In such a case, it seems that the customer is hesitating to select the specification or configuration item in consideration of the price range. Therefore, when the estimated price is corrected to be low in such a case, the estimated price can be set to a price preferred by the customer.

Step S1210: A degree of intention for vehicle purchase (i.e., a numerical degree of intention to purchase the vehicle) of the customer is calculated, so as to correct the estimated price in accordance with the intention degree. For example, when the intention degree is larger than a predetermined value, the estimated price is corrected to be low.

The degree of intention for vehicle purchase of the customer is specifically calculated as follows: A standard value of the intention degree is previously set, and the standard value is corrected to be increased when the number of estimate requests having been made by the customer in the present system is larger than a predetermined number. Also, when the number of accesses having been made to the purchase review information list window **D-2** (shown in FIG. **31**) by the customer is larger than a predetermined number, the standard value is corrected to be increased. Thus, the degree of intention for vehicle purchase of the customer is calculated.

Step S1211: A price range of the customer is presumed on the basis of the specification selection history of the customer, so as to correct the estimated price to be low when the estimated price is higher than the presumed price range by a predetermined value or more.

The price range of the customer is specifically presumed as follows: A price obtained by subtracting a predetermined value from the manufacturer recommended retail price of the vehicle is set as a standard price range. When, for example, the customer repeated the selection and cancel of a given specification item, a price discounted from the standard price range is presumed as the price range of the customer. At this point, a price corresponding to that specification item may be discounted from the standard price range. Also, when the customer selected a specification item once cancelled, a price discounted from the standard price range is presumed as the price range of the customer.

The correction using access history may be performed in any of various methods other than those described in S121 through S1211. For example, the situation of accesses having been made by the customer to the purchase review information list window **D-2** (shown in FIG. **31**) or the selected specification display window **B-15** (shown in FIG. **27**), or the number of times, hours or days of browsing these windows within a predetermined period (of, for example, 1 month) may be read so as to correct the estimated price in accordance with such information. For example, when the number of times of browsing the windows within the predetermined period is larger than a predetermined number, the estimated price may be corrected to be low. At this point, the estimated price may be corrected to be gradually lower as the number of browsing times is larger. This is because the customer tends to enter into negotiations as the frequency of browsing these windows is higher.

Furthermore, the number of estimate requests having been made in the present system previously within a predetermined period by the customer may be read, so as to correct the estimated price, in accordance with this information, to be low, for example, when the number of estimate requests having been made within the predetermined period is larger than a predetermined number. More specifically, for example, when the number of estimate requests having been made by the customer within the past 3 months regardless of the distributor and the specification is 10 or more, or when the number of estimate requests having been made within the past 3 months of the same distributor regarding different specifications is 5 or more, the estimated price may be corrected to be low. Furthermore, the estimated price may be corrected to be gradually lower as the number of estimate requests is larger.

Moreover, information of a site accessed by the customer immediately before accessing to the site of the present system, namely, access linked site information, may be read so as to correct the estimated price in accordance with this information. For example, when the access linked site is a homepage of the manufacturer, the estimated price may be corrected to be low. Alternatively, when the number of access linked sites having been accessed within a past predetermined period (of, for example, 3 months) is larger than a given number, the estimated price may be corrected. In this case, the estimated price may be corrected to be gradually lower as the number of access linked sites is larger.

Furthermore, although the estimated price is corrected in accordance with the frequency of operating the "ZOOM" button in step S122, this procedure may be omitted so that the degree of intention for vehicle purchase may be calculated on the basis of the accesses having been made to the "ZOOM" display by the customer in step S1210. For example, when the "ZOOM" display was accessed, the standard value of the intention degree may be corrected to be increased.

Similarly, although the estimated price is corrected in accordance with the image download situation in step S124, this procedure may be omitted so that the degree of intention for vehicle purchase may be calculated on the basis of the presence or absence of the "image download" having been performed by the customer in step S1210. For example, when the image was downloaded, the standard value of the intention degree may be corrected to be increased.

### (4) Modification/update processing for estimated price DB 35:

Now, the modification/update processing for the estimated price DB **35** executed by the CPU of the manufacturer server **1** will be described with reference to FIGS. **15** and **16**. FIG. **15** is a flowchart for showing basic procedures in modifying/updating the estimated price DB **35**, which is performed with respect to each dealer. Also, the modification/update processing for the estimated price DB **35** is executed by the CPU of the manufacturer server **1** in a give cycle.

Referring to FIG. **15**, step S61: Various information necessary in each subroutine described below are read from the reference information DB **36**.

Step S62: A subroutine automatically performed by the manufacturer server **1** for modifying/updating the data of the estimated price DB **35** in accordance with prescribed conditions (namely, an automatic modification/update subroutine) is performed. The automatic modification/update subroutine will be described in detail below.

Step S63: The data of the estimated price DB **35** is modified/updated on the basis of estimated prices obtained in step S62.

Steps S64 through S66: With respect to a user from which an estimate request regarding a customized vehicle has been already received and to which the estimated price of the customized vehicle has been presented (whereas, a predetermined time has not elapsed since the presentation of the estimated price), it is determined by referring to the customer DB **34** whether or not the estimated price of the customized vehicle has become low due to predetermined or larger modification caused in the modification/update of step S63 (step S64). When the estimated price has become low, an e-mail (the estimate result response mail **C-11**) describing that the estimated price of the customized vehicle has been modified and the modified price is sent to the user terminal **5** (step S65). Subsequently, an e-mail that the e-mail regarding the modification of the estimated price has been sent to the user terminal **5** is sent to the dealer server **2** (step S66).

### - Automatic modification/update subroutine -

FIG. **16** is a flowchart of the automatic modification/update subroutine performed in step S62 in the flow shown in FIG. **15**. This subroutine is performed for automatically modifying/updating the data of the estimated price DB **35** by the CPU of the manufacturer server **1** with respect to each dealer as described above.

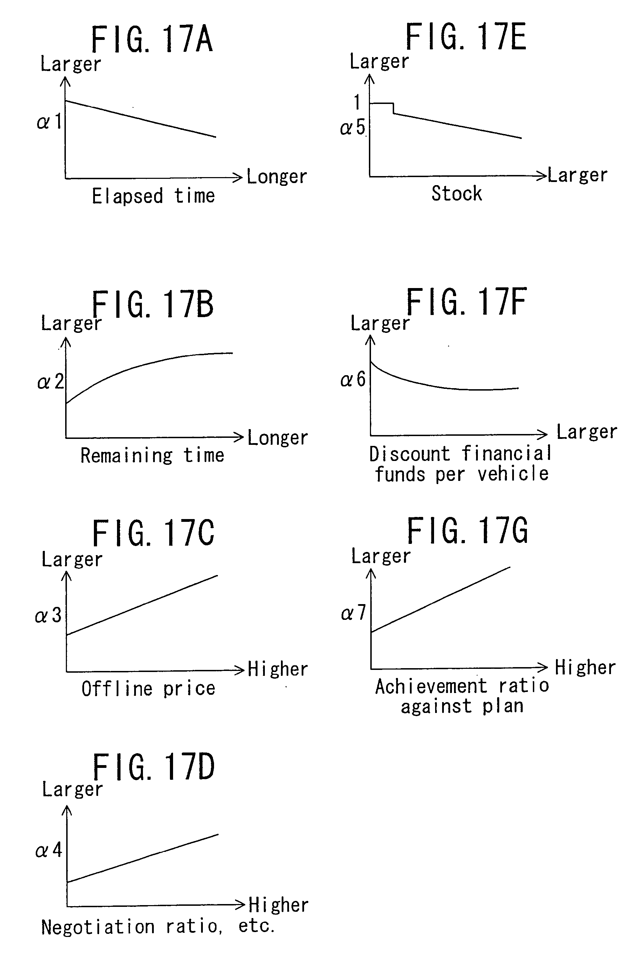

Referring to FIG. **16**, step S301: With respect to each specification or configuration of the vehicle stored in the estimated price DB **35**, the estimated price is modified in accordance with time (days) elapsed from the sales start of the vehicle. Specifically, as exemplified in FIG. **17A**, a map for defining the relationship between the time elapsed from the sales start and a modification coefficient α**1** of the estimated price is previously stored in the reference information DB **36**, so that a modified estimated price can be calculated by multiplying each estimated price read from the estimated price DB **35** by the modification coefficient α**1** read from this map. At this point, the modification coefficient α**1** is set, as shown in FIG. **17A,** so as to be gradually reduced as the elapsed time is longer. Thus, even when the vehicle having that specification loses its novelty with time elapsed from the sales start, a price can be appropriately set in accordance with the loss of novelty.

Step S302: With respect to each specification or configuration, the estimated price is modified in accordance with remaining time (days) until the next model change on the basis of a modification coefficient α**2**, for example, as shown in a map of FIG. **17B** in the same manner as in step S301. The value of the modification coefficient α**2** can be set, as shown in FIG. **17B**, to be increased as the remaining time is longer. Thus, the discount can be increased with respect to a specification or configuration close to the next model change, so as to keep the price competitive power.

Step S303: With respect to each specification or configuration, the estimated price is modified in accordance with offline prices (market prices) of the specification and similar specifications on the basis of a modification coefficient α**3**, for example, as shown in a map of FIG. **17C**. Specifically, data of offline prices of the specification and similar specifications set by the dealer related to the currently performed modification/update processing is first read from the progress management DB **32**. Then, an average, the lowest price or the like of the offline prices within a past predetermined period is calculated, and the modification coefficient α**3** corresponding to this calculated value is read from the map of FIG. **17C**, by which the estimated price is multiplied.

Thus, the estimated price can be directly influenced by change of the market prices. In calculation of the average, a price of a vehicle having an equivalent specification or configuration may be weighted, and a price of a vehicle having a similar specification may be corrected to a price of one having an equivalent specification or configuration before the calculation. Also, a price below a predetermined range, such as a price presented to a large customer, is preferably excluded and a price beyond a predetermined range is preferably excluded. Moreover, a weighted average obtained by more largely weighting latter data may be used as the average. For example, data of vehicles sold within a recent predetermined period may be weighted, data of vehicles sold before the predetermined period may be excluded, data of vehicles sold in the same month may be weighted, and data of vehicles sold in the other period may be excluded.

Step S304: With respect to each specification, the estimated price is modified in accordance with information regarding a competitive vehicle. Values of modification coefficients used in this calculation can be previously input to be stored in the reference information DB **36** by the manufacturer and/or the dealer. For example, the modification coefficients based on the competitive power such as the specification, the performance and the equipment of the competitive vehicle are preferably input by the manufacturer, and the modification coefficients based on sales information such as sales start, the price and the sales result of the competitive vehicle are preferably input by the dealer. When the estimated price is thus set in accordance with the competitive degree with the competitive vehicle, the competitive power against the competitive vehicle can be kept.

Step S305: With respect to each specification, the estimated price is modified in accordance with the sales result of the specification or configuration and similar specifications or configurations, namely, a ratio of entering into negotiations from presentation of estimate (negotiation ratio) or a ratio of further entering into a contract (contract ratio) on the basis of a modification coefficient α**4**, for example, as shown in a map of FIG. **17D**. The value of the modification coefficient α**4** can be set, as shown in FIG. **17D**, to be larger as the negotiation ratio or the contract ratio is higher. Thus, the estimated price can be set appropriately according to evaluation in the market. At this point, data of specified vehicles such as a bargain vehicle and a limited vehicle is excluded, and data of estimate presented to the same customer with respect to the same or similar specification is preferably excluded. This is for accurately obtaining the negotiation ratio or the contract ratio.

Also, in the calculation of the negotiation ratio and the contract ratio, weight may be given to the same specification or configuration and data of a similar specification or configuration may be corrected to that of an equivalent specification as in the calculation of the offline price performed in step S303. Furthermore, data used for the calculation may be given a larger weight as it is later. Specifically, data obtained within a recent predetermined period may be given a weight, data obtained before the predetermined period may be excluded, data obtained in the same month may be given a weight, and data obtained in the other period may be excluded.

Step S306: With respect to each specification or configuration, the estimated price is modified in accordance with competition loss information regarding the specification and similar specifications. A modification coefficient used in this calculation, which is not shown in any drawing, can be set to be smaller as the number of competition losses is larger. At this point, the competition loss means a case where a customer to which an estimated price has been presented did not enter into negotiations or a contract with the dealer but entered into negotiations or a contract with another dealer.

The value of the modification coefficient can be set to be constant or increased when the number of competition losses within a predetermined period is smaller than a predetermined number. In this case, the modification coefficient may be largely changed when there is a large difference in the estimated price between the lost dealer and the won dealer. Also, even in the case of competition loss, if the number of competitive estimates is larger than a predetermined number, the modification coefficient may be changed small. Specifically, a predetermined change extent of the modification coefficient can be divided by the number of competitive estimates.

Furthermore, in the calculation of the modification coefficient, data of the same specification may be weighted and data of a similar specification may be corrected to that of an equivalent specification in the same manner as in steps S303 and S305. Moreover, data used in the calculation may be given a larger weight as the data is later. Specifically, for example, data obtained within a recent predetermined period may be weighted, data obtained before the predetermined period may be excluded, data obtained in the same month may be weighted, and data obtained in the other period may be excluded. It may be determined by each dealer whether or not this modification based on the competition loss information is employed.

Step S307: With respect to each specification or configuration, the estimated price is modified in accordance with the correlation between the estimated price of the specification and an estimated price of another specification. The value of a modification coefficient used in this calculation can be previously input to be stored in the reference information DB **36** by the manufacturer or the dealer. Specifically, when the data stored in the estimated price DB **35** is modified/updated in accordance with the movement of the market and the like as described above, the correlation between the price and the specification of the vehicles stored in the estimated price DB **35** may be changed, so that, for example, a difference in estimated price may be too small although there is a large difference in specification, or a difference in estimated price may be too large although there is a slight difference in specification. Moreover, there may arise inconsistency that the estimated price of a vehicle having a better specification is lower than that of a vehicle having a poor specification.

Accordingly, with respect to a target specification or configuration (namely, a specification or configuration whose estimated price is to be modified), another specification having a comparatively large number of common specification or configuration items is selected as a comparative specification or configuration, so as to compare a difference in specification or configuration and a difference in estimated price therebetween.

The comparative specification or configuration is selected, for example, on the basis of the following: A specification or configuration different in basic components such as the engine and the transmission is not selected as the comparative specification or configuration but a specification or configuration having the same basic components but different non-basic components (such as an option part like a decoration) is selected as the comparative specification or configuration. In particular, a specification or configuration different in two or less components may be selected as the comparative specification or configuration. Alternatively, instead of selecting based on the basic and the non-basic components, without selecting a specification different in an expensive component, a specification different in a predetermined number or less of inexpensive components may be selected as the comparative specification. Furthermore, a specification in which a manufacturer recommended retail price of specification items different from those of the target specification is smaller than a predetermined value may be selected as the comparative specification.

In comparing the difference in specification or configuration and the difference in estimated price between the target specification or configuration and the comparative specification or configuration, in the case where the difference in estimated price is too small although the difference in specification or configuration is rather large or where the difference in estimated price is too large although the difference in specification or configuration is small as described above, the estimated price is modified by adding a correction value to the too high estimated price or subtracting a correction value from the too small estimated price. Specifically, the estimated prices of the respective specifications or configurations are successively calculated in this step S307, and if the estimated price of the comparative specification is modified before the target specification or configuration, the estimated price of the comparative specification or configuration is modified. On the contrary, if the estimated price of the comparative specification is modified after the target specification (namely, if the estimated price of the comparative specification has not been modified), the estimated price of the target specification is modified.

In the case where there is inconsistency between the target specification and the comparative specification, if the inconsistency cannot be eliminated even through the aforementioned correction, the estimated prices of these specifications are modified to be identical at least to each other.

Also, in the case where there are a plurality of comparative specifications, this correction is performed as follows: A predetermined number (of, for example, 3) of specifications or configurations whose estimated prices are recently modified are selected in the ascending order of the degree of difference from the target specification or configuration. Each of the thus selected plural comparative specifications is compared with the target specification, so as to set correction values for the respective comparative specifications. Then, the average of the correction values is calculated, and the estimated price of the target specification is corrected on the basis of this average.

In the estimated price correction performed in step S307, the estimated price may be modified, for example, by multiplying the too high estimated price by a modification coefficient or by dividing the too low estimated price by a modification coefficient.

Through the correction thus performed in step S307, the estimated prices of the respective specifications are rationalized.

Step S308: With respect to each specification, the estimated price is modified in accordance with information of at least one of a stock situation and a manufacture situation on the basis of a modification coefficient α**5**, for example, as shown in a map of FIG. **17E**. Specifically, data of the stock situation or the assembly situation on the manufacture line of the vehicle having the specification is read from the progress management DB **32**. At this point, with respect to the stock situation, the stock in the dealer whose estimated price is currently being modified is particularly significant but in addition, the stock in another dealer or in the manufacturer may be referred to.

If the stock is large or a large number of vehicles are being assembled on the manufacture line, the estimated price is corrected to be low. Specifically, as shown in FIG. **17E**, when there is no or few (for example, 1 or 2) stock, the estimated price is not modified, and when the stock is larger, the estimated price is corrected to be gradually lower as the stock is larger. Thus, since the demand for sales promotion is increased as the number of stocked or manufactured vehicles is larger, the sales promotion can be appropriately proceeded by relatively lowering the estimated price. If the stock of the vehicle is in another dealer, the cost of transport from that dealer is preferably considered. After this modification, when an estimate request is received from a user, such stock information may be provided to the user. For example, the user may be provided with information that a vehicle having a similar specification to the customized vehicle related to the estimate request is in stock.

Step S309: With respect to all the specifications, the estimated price is modified in accordance with the discount financial funds per vehicle of that model on the basis of a modification coefficient α**6**, for example, as shown in a map of FIG. **17F**. Specifically, the server **2** of the dealer whose data are currently being modified is accessed through the internet **3**, and the total discount financial funds of this month of vehicles of the model is read from a database of sales management information connected to the dealer server **2**. The total discount financial funds is divided by the number of vehicles actually sold in the same month previous year or in the previous month, so as to obtain the discount financial funds per vehicle of this month. Then, the modification coefficient α**6** corresponding to the obtained discount financial funds is read from the map of FIG. **17F**, and the estimated price is multiplied by the modification coefficient. According to FIG. **17F**, the modification coefficient α**6** is set to be smaller as the discount financial funds per vehicle is larger, and hence, the estimated price can be appropriately set in accordance with the discount financial funds. Instead of the number of vehicles actually sold, the number of estimate requests received by that point may be used.

Step S310: With respect to all the specifications or configurations, the estimated price is modified in accordance with the sales result of vehicles of that model against the sales plan of this month on the basis of a modification coefficient α**7**, for example, as shown in a map of FIG. **17G**. Specifically, in the same manner as in step S309, the actually sold number of and the number planned to sell vehicles of that model in this month are read from the database of the sales management information of the dealer, an achievement ratio against the sales plan is calculated, and the modification coefficient α**7** corresponding to this achievement ratio is read. The value of the modification coefficient α**7** can be set, as shown in FIG. **17G**, to be larger as the achievement ratio against the sales plan is larger. Thus, the estimated price can be appropriately set in accordance with the degree of achievement of the sales plan. Instead of the achievement ratio against the sales plan, a ratio of the actual number of estimate requests to the planned number of estimate requests of this month or a ratio of the actual number of negotiations to the planned number of negotiations of this month may be used.

In this manner, according to this embodiment, a user can easily, pleasantly and interactively select a preferred specification from specification items for a customized vehicle that can be supplied by the manufacturer.

Also, an estimated price of the thus selected customized vehicle having the preferred specification or configuration is automatically calculated by the manufacturer server **1** by referring to the estimated price DB **35**. Therefore, even though each customized vehicle is manufactured in small number and there are a variety of kinds of customized vehicles, the estimated price of each customized vehicle can be accurately and rapidly calculated, so as to be immediately provided to the user without manual assistance. This can largely improve the system efficiency along with business efficiency of the dealer and the manufacturer.

Also, the estimated price DB **35** is automatically updated in accordance with the movement of the vehicle sales market, the sales plan of each dealer and the like, and an estimated price obtained based on the data of the estimated price DB **35** is automatically corrected in accordance with the situation and a contract possibility of each customer. Therefore, an optimal moderate estimated price according to the preference of the customer can be obtained. Furthermore, since an estimated price too high as compared with one set by another dealer can be prevented from being provided to a customer, an opportunity of negotiations can be minimally lost against the intention of the dealer.

In addition, since the update of the estimated price DB **35** and the correction of the estimated prices are performed with respect to each dealer, the sales business of the respective dealers in different situations can be appropriately supported.

### (Modification 1)

In Embodiment 1, the estimated price read from the estimated price DB **35** is automatically corrected in consideration of the prescribed information regarding the customer so that the corrected estimated price can be sent to the customer in the estimated price providing processing (shown in FIG. **12**). At this point, instead of sending the corrected estimated price to the customer, the corrected estimated price may be sent to the dealer server **2** of the dealer having received the estimate request.

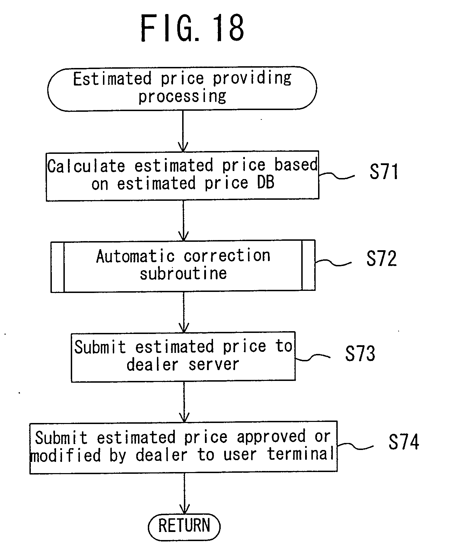

Specifically, basic procedures in estimated price providing processing of Modification 1 will be described with reference to a flowchart of FIG. **18**.

Referring to FIG. **18**, step S71: Referring to the data set by the selected dealer in the estimated price DB **35**, an estimated price corresponding to the identification information (customize number) of the customized vehicle selected by the vehicle specification or configuration selection processing (M2) is read (estimated price calculating means).

Step S72: The automatic correction subroutine (as shown in FIG. **13**) for automatically correcting the estimated price read in step S71 in consideration of the prescribed information regarding the customer is performed.

Step S73: The estimated price corrected in step S72 is sent to the dealer server **2** as reference information. This estimated price is, for example, sent by e-mail. The dealer having thus received the estimated price determines whether the estimated price is approved or modified, and the approval or a modified estimated price is sent to the manufacturer server **1**.

Step S74: The estimated price approved or modified by the dealer is sent by e-mail to the mail address (the user terminal **5**) previously input by the customer, and is stored in the customer DB **34** in association with the user ID.

In this manner, the dealer having received the estimated price can set a more appropriate estimated price in consideration of the current situation (such as lowering of market prices of vehicles).

In Modification 1, the dealer server **2** having received the estimated price from the manufacturer server **1** may send an e-mail to the user terminal **5** of the customer having made the estimate request for providing the approved estimated price or the modified estimated price to the customer.

### (Modification 2)

In Embodiment 1, the estimated price DB **35** is modified/updated in accordance with the prescribed information regarding the vehicle, the situation of each distributor and the like as shown in the flowchart of FIG. **16**, and an estimated price obtained on the basis of the estimated price DB **35** is modified/corrected in accordance with the information regarding each customer and the like as shown in the flowcharts of FIGS. **13** and **14**. Instead, the modification/update of the estimated price DB **35** alone may be performed without performing the correction of the estimated price.

### (Modification 3)

In Embodiment 1, the modification/update of the estimated price DB **35** is executed by the manufacturer server **1** alone. However, in addition to the modification/update of the estimated price DB **35** executed by the manufacturer server **1**, the estimated price DB **35** may be updated in response to a request from each dealer specifically as follows:

When the manufacturer server **1** receives a modification/update request (update request signal) for the estimated price DB **35** sent from the dealer terminal **4** through the dealer server **2**, estimated prices set by that dealer are read from the estimated price DB **35**, and the estimated price of each specification is modified through the automatic modification/update subroutine (shown in FIG. **16**). The thus calculated estimated prices are sent to the dealer server **2**.

The dealer having received the estimated prices reviews the estimated price of each specification by using the received estimated prices as reference information, and modifies the estimated price if necessary.

The manufacturer server **1** updates the estimated price DB **35** on the basis of the estimated prices having been thus modified by the dealer.

In the case where the estimated price DB **35** is thus updated, the modification/update of the estimated price DB **35** by the manufacturer server **1** is preferably avoided for a predetermined period from the update requested by the dealer for the following reason: In the automatic modification/update subroutine, the estimated prices are modified on the basis of the prescribed information regarding the vehicle, the situation of each dealer and the like as described above, and these factors are not largely changed in a short period of time. Therefore, if the estimated price DB **35** is modified/updated by the manufacturer server **1** after updating the estimated price DB **35** in response to a request from the dealer, the update derived from the same factor overlaps, so that an appropriate estimated price may not be provided.

### EMBODIMENT 2

In Embodiment 2; the estimated price DB **35** is not modified/updated but an estimated price to be presented to a customer is corrected at the time of presentation differently from Embodiment 1. Also, the estimated price is corrected not only on the basis of the customer information alone as in Embodiment 1 but also on the basis of the prescribed information regarding the vehicle, the situation of the dealer and the like.

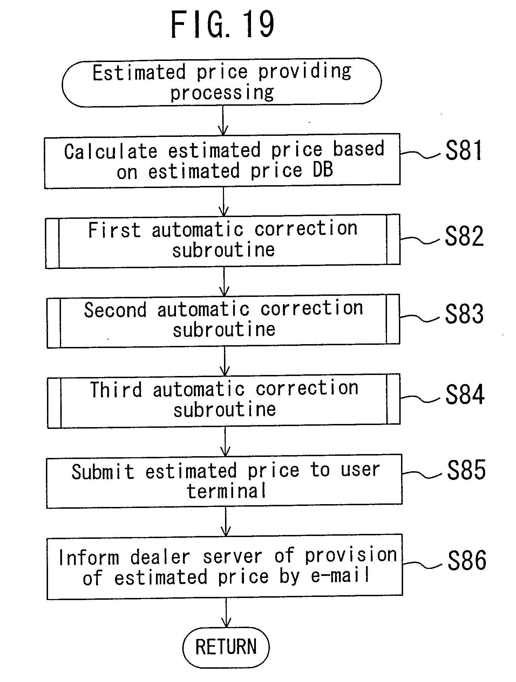

Specifically, in Embodiment 2, the manufacturer server **1** does not execute the modification/update processing for the estimated price DB **35** of Embodiment 1 (shown in FIG. **15**) but executes estimated price providing processing according to a flowchart of FIG. **19**.

Referring to FIG. **19**, step S81: The data set by a dealer specified by the customer is read from the estimated price DB **35**, and an estimated price corresponding to the identification information (customize number) of the customized vehicle selected by the vehicle specification selection processing (M2) is calculated.

Step S82: The estimated price calculated in step S81 is subjected to a first automatic correction subroutine. The first automatic correction subroutine is executed in accordance with the flow shown in FIG. **16** and hence is not described in detail. Specifically, in the first automatic correction subroutine, the estimated price is corrected on the basis of the prescribed information regarding the vehicle, the situation of the dealer and the like.

Step S83: The estimated price corrected in step S81 is subjected to a second automatic correction subroutine. The second automatic correction subroutine is executed in accordance with the flows shown in FIGS. **13** and **14** and hence is not described in detail. Specifically, in the second automatic correction subroutine, the estimated price is corrected on the basis of the customer information.

Step S84: The estimated price corrected in step S83 is subjected to a third automatic correction subroutine in which the estimated price is corrected by comparing with an estimated price set by another dealer (a dealer different from the dealer related to the estimate request). The third automatic correction subroutine will be described in detail below.

Step S85: The estimated price corrected in step S84 is sent by e-mail to the mail address (the user terminal **5**) previously input by the customer, and is stored in the customer DB **34** in association with the user ID.

Step S86: An e-mail that the estimated price has been presented to the customer is sent to the dealer server **2**.

### - Third automatic correction subroutine -

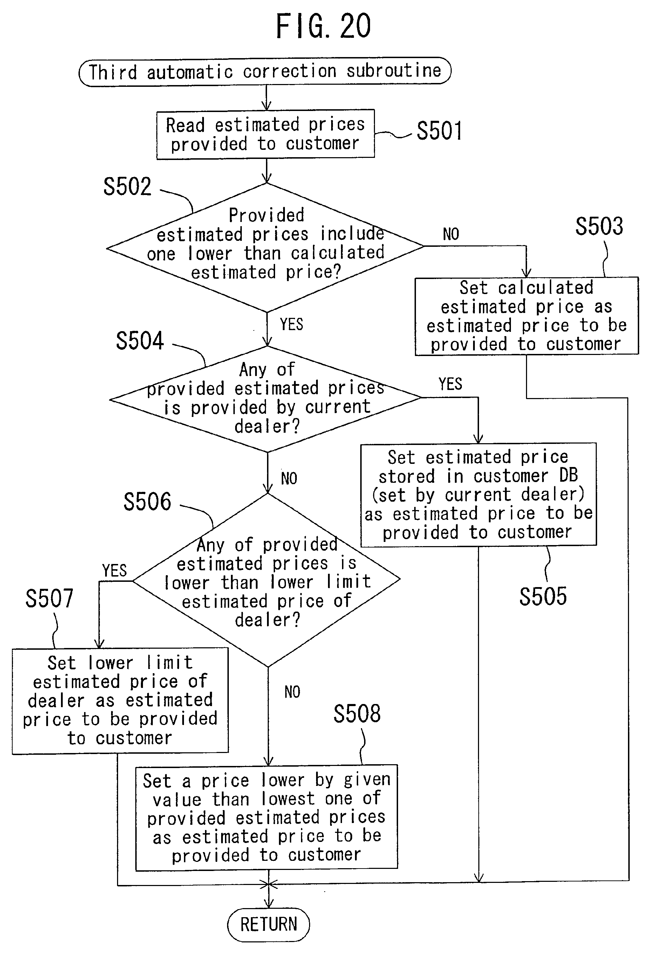

FIG. **20** shows specific procedures in the third automatic correction subroutine performed in step S84 in the flow shown in FIG. **19**. In this subroutine, the estimated price having been corrected by the first and second automatic correction subroutines is corrected by comparing with an estimated price set by another dealer.

Referring to FIG. **20**, step S501: Estimated prices already provided to the customer having made the estimate request and specifications related to these estimate requests are read from the customer DB **34**. In this case, the customer DB **34** functions as the reference information DB **36**.

Steps S502 and S503: On the basis of the read data, it is determined whether or not the customer has already been provided with estimated prices of a customized vehicle having the same specification as that input with respect to the current estimate request and whether or not any of the already provided estimated prices is lower than the estimated price resulting from the correction by the second automatic correction subroutine (which designated as the calculated estimated price) (step S502). When none is lower, the calculated estimated price is set as the estimated price to be provided to the customer (step S503).

Steps S504 and S505: It is determined whether or not any of the estimated prices already provided to the customer is provided by the current dealer (the dealer related to the current estimate request) (step S504). When any of the estimated prices is provided by the dealer, the estimated price stored in the customer DB **34** (i.e., the estimated price already provided by the dealer) is set as the estimated price to be provided to the customer this time (step S505).

Steps S506, S507 and S508: It is determined whether or not any of the estimated prices already provided to the customer is lower than a lower limit estimated price set by the current dealer (step S506).

At this point, the lower limit estimated price is previously set with respect to each specification by each dealer and corresponds to a lowest price allowable as the price of the specification (the customized vehicle) by the dealer. The lower limit estimated price is stored in the reference information DB **36** correspondingly to each specification set by each dealer. Also, the lower limit estimated price of each specification set by each dealer is automatically modified by the manufacturer server **1** in accordance with time elapsed from the sales start of the vehicle. Specifically, the lower limit estimated price is set to be gradually lower as the elapsed time is longer.

When any estimated price is lower than the lower limit estimated price in step S506, the lower limit estimated price set by the current dealer is set as the estimated price to be provided to the customer (step S507). On the other hand, when none is lower than the lower limit estimated price in step S506, a price obtained by subtracting a predetermined value from the lowest estimated price among the estimated prices already provided to the customer is set as the estimated price to be provided to the customer. However, at this point, when the thus set estimated price is lower than the lower limit estimated price, the lower limit estimated price is set as the estimated price to be provided to the customer.

In this manner, although the modification/update of the estimated price DB **35** is not executed in Embodiment 2, the estimated price obtained on the basis of the estimated price DB **35** is corrected in accordance with the movement in the vehicle sales market, the sales plan of the dealer and the like, and further corrected in accordance with the situation and the contract possibility of each customer. Accordingly, similarly to the case where the estimated price DB **35** is modified/updated, an appropriate estimated price according to the preference of each customer can be provided to the customer.

Also, in the case where one customer makes a plurality of estimate requests regarding the same customized vehicle with different plural dealers respectively specified, a price lower than any of already presented estimated prices by a given value can be provided to the customer. On the other hand, an estimated price lower than the lower limit estimated price previously set by the dealer is never provided to the customer.

In this manner, an estimated price largely exceeding an estimated price set by another dealer can be minimally presented to a customer, and hence, the dealer minimally loses an opportunity of negotiations.

Moreover, in the case where a customer makes an estimate request regarding the same customized vehicle with the same dealer specified, the estimated price already presented to the customer (namely, the estimated price stored in the customer DB **34**) is provided. Therefore, the reliability of the customer on the presented estimated price cannot be spoiled, and in addition, collection of negotiations to a particular dealer (specifically, a dealer that sets the lower limit estimated price to the lowest price) can be avoided.

In addition, since the lower limit estimated price is modified to be lower as the time elapsed from the sale start of the vehicle is longer, the lower limit estimated price can be set in accordance with the market price, so that an appropriate estimated price can be provided to a customer.

### (Modification 1)

Also in Embodiment 2, after automatically correcting the estimated price read from the estimated price DB **35**, the corrected estimated price can be sent to the corresponding dealer server **2** in the estimated price providing processing (shown in FIG. **19**).

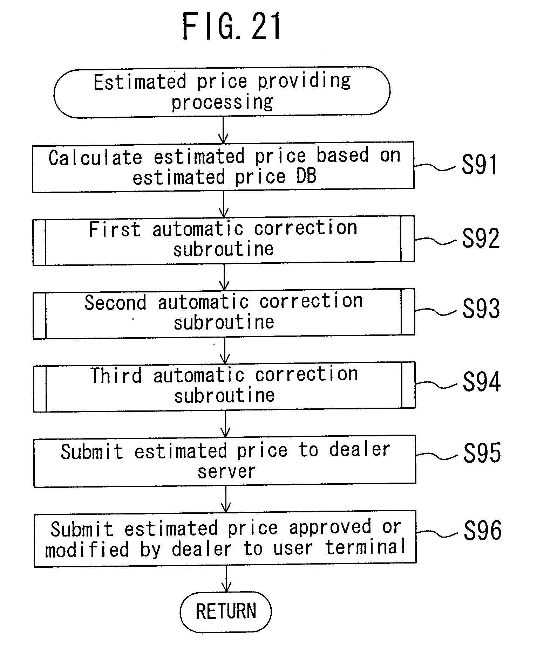

FIG. **21** is a flowchart for showing basic procedures in estimated price providing processing performed in Modification 1 of Embodiment 2. In FIG. **21**, steps S91 through S94 are respectively the same as steps S81 through S84 (shown in FIG. **19**), and hence they are not described in detail.

Referring to FIG. **21**, step S95: The estimated price corrected in steps S92 through S94 is sent to the dealer server **2** as reference information. The dealer having received the estimated price determines whether the estimated price is approved or modified, and the approval or the modified estimated price is sent to the manufacturer server **1**.

Step S96: The estimated price approved or modified by the dealer is sent by e-mail to the mail address (the user terminal **5**) previously input by the customer, and is stored in the customer DB **34** in association with the user ID.

In Modification 1, the dealer server **2** having received the estimated price from the manufacturer server **1** may send an e-mail to the user terminal **5** having made the estimate request for providing the approved or modified estimated price to the customer.

### (Modification 2)

In Modification 1 of Embodiment 2, the dealer having received the estimated price from the manufacturer server **1** merely approves or modifies the estimated price in the estimated price providing processing. In addition, the estimated price DB **35** may be modified/updated at this point.

Specifically, the dealer having received the estimated price corrected by the first through third automatic correction subroutines sends, in addition to the approval or the modified estimated price, an update request for the estimated price DB **35** to the manufacturer server **1**.

Then, the manufacturer server **1** having received the estimated price approved or modified by the dealer and the update request for the estimated price DB **35** updates the estimated price DB **35** on the basis of the received estimated price.

In the case where the estimated price DB **35** is thus updated, the first automatic correction subroutine of the estimated price providing processing is preferably avoided for a predetermined period from the update requested by the dealer for the following reason: In the first automatic correction subroutine (shown in FIG. **16**), the estimated price is modified on the basis of the prescribed information regarding the vehicle, the situation of the dealer and the like as described above, and these factors are not largely changed in a short period of time. Therefore, if the estimated price is further corrected after updating the estimated price DB **35** in response to the request from the dealer, the update derived from the same factor overlaps, so that an appropriate estimated price may not be provided.

### OTHER EMBODIMENTS

Although the estimated price DB **35** stores an estimated price per vehicle with respect to each kind of customized vehicle in each of the above-described embodiments, an estimated price of each specification or configuration item or equipment (such as an estimated price of one engine) may be stored instead in the estimated price DB **35**. In this case, an estimated price of one customized vehicle is calculated by adding up estimated prices of all specification or configuration items and equipment included in the customized vehicle. Also in this case, the estimated prices of the respective specification or configuration items and equipment are modified in accordance with the estimated price DB modification/update processing (shown in FIG. **15**) so as to update the estimated price DB **35** in Embodiment 1.

Furthermore, the respective processing executed by the manufacturer server **1** in each of the embodiments may be shared to be executed by a plurality of servers.

In addition, the manufacturer does not force dealers to employ the system of Embodiment 1 or 2 but each dealer spontaneously employs the present system to its mind in order to provide appropriate estimated prices to customers.

## Claims

1. A vehicle sales support system for supporting vehicle sales to customers online by allowing a customer to select, via communications lines, a preferred specification from a plurality of different specifications set with respect to a vehicle and sending, to said customer, an estimated price, which is set by a distributor specified by said customer among a plurality of distributors, of a selectively specified vehicle having said selected specification, comprising:
a manufacturer recommended retail price database for storing data for enabling calculation of manufacturer recommended retail prices of vehicles respectively having said plurality of specifications;
an estimated price database for storing calculation data for enabling calculation of estimated prices, set by each of said plurality of distributors, of the vehicles respectively having said plurality of specifications;
a reference information database for storing prescribed data necessary for correcting said calculation data stored in said estimated price database;
specification selecting means for allowing said customer to selectively input a desired specification with said plurality of specifications of the vehicle presented, setting said selectively input specification as said selected specification of said selectively specified vehicle, calculating a manufacturer recommended retail price of said selectively specified vehicle on the basis of said data stored in said manufacturer recommended retail price database, and providing said calculated manufacturer recommended retail price to said customer;
distributor specifying means for allowing said customer to specify and input a desired distributor with said plurality of distributors presented, and setting said input distributor as a specified distributor;
estimated price calculating means for calculating, in response to an estimate request input by said customer, an estimated price, which is set by said specified distributor set by said distributor specifying means, of said selectively specified vehicle set by said specification selecting means on the basis of said calculation data stored in said estimated price database;
estimated price providing means for providing said estimated price calculated by said estimated price calculating means to said customer or providing said estimated price and information of said selected specification to said specified distributor; and
updating means for correcting said calculation data set by each distributor stored in said estimated price database on the basis of said prescribed data stored in said reference information database, and updating said estimated price database on the basis of said corrected calculation data.

2. A vehicle sales support system for supporting vehicle sales to customers online by allowing a customer to select, via communications lines, a selected specification from a plurality of different specifications set with respect to a vehicle and sending, to said customer, an estimated price, which is set by a distributor specified by said customer among a plurality of distributors, of a selectively specified vehicle having said selected specification, comprising:
a manufacturer recommended retail price database for storing data for enabling calculation of manufacturer recommended retail prices of vehicles respectively having said plurality of specifications;
an estimated price database for storing calculation data for enabling calculation of estimated prices, set by each of said plurality of distributors, of the vehicles respectively having said plurality of specifications;
a reference information database for storing prescribed data necessary for correcting said estimated prices calculated on the basis of said calculation data stored in said estimated price database;
specification selecting means for allowing said customer to selectively input a desired specification with said plurality of specifications of the vehicle presented, setting said selectively input specification as said selected specification of said selectively specified vehicle, calculating a manufacturer recommended retail price of said selectively specified vehicle on the basis of said data stored in said manufacturer recommended retail price database, and providing said calculated manufacturer recommended retail price to said customer;
distributor specifying means for allowing said customer to specify and input a desired distributor with said plurality of distributors presented, and setting said input distributor as a specified distributor;
estimated price calculating means for calculating, in response to an estimate request input by said customer, an estimated price, which is set by said specified distributor set by said distributor specifying means, of said selectively specified vehicle set by said specification selecting means on the basis of said calculation data stored in said estimated price database;
correcting means for correcting said estimated price calculated by said estimated price calculating means on the basis of said prescribed data stored in said reference information database; and
estimated price providing means for providing said estimated price corrected by said correcting means to said customer or providing said estimated price corrected by said correcting means and information of said selected specification to said specified distributor.

3. The vehicle sales support system of Claim 1 or 2,
wherein said prescribed data stored in said reference information database corresponds to a sales start time of the vehicle, and
said updating means corrects said calculation data set by each distributor and stored in said estimated price database on the basis of elapsed time from said sales start time of the vehicle in a manner that said estimated prices of the vehicles respectively having said plurality of specifications calculated by said estimated price calculating means are lower as said elapsed time is longer.

4. The vehicle sales support system of one of the preceding claims,
wherein said prescribed data stored in said reference information database corresponds to a sales start time of the vehicle, and
said correcting means corrects, on the basis of elapsed time from said sales start time of the vehicle, said estimated price calculated by said estimated price calculating means to be lower as said elapsed time is longer.

5. The vehicle sales support system of one of the preceding claims,
wherein said prescribed data stored in said reference information database corresponds to an estimated price of a vehicle already provided to said customer and a lower limit estimated price set by each distributor with respect to each of said plurality of specifications, and
when it is found based on said prescribed information that said customer having input said estimate request is already provided with an estimated price of a vehicle having a specification identical to said selected specification related to said estimate request, said correcting means corrects said estimated price of said selectively specified vehicle calculated by said estimated price calculating means to be lower than said already provided estimated price by a given value and to be higher than said lower limit estimated price of said selected specification.

6. The vehicle sales support system of Claim 5,
wherein when said estimated price already provided to said customer having input said estimate request is provided by said specified distributor related to said estimate request, said correcting means is inhibited from correcting said estimated price calculated by said estimated price calculating means.

7. The vehicle sales support system of Claim 5 or 6, further comprising lower limit modifying means for modifying said lower limit estimated price of each specification stored in said reference information database with respect to each distributor,
wherein said lower limit modifying means lowers, on the basis of said elapsed time from said sales start time of the vehicle, said lower limit estimated price of each specification as said elapsed time is longer.

8. The vehicle sales support system of one of the preceding claims,
wherein said estimated price providing means allows said specified distributor to input an estimated price of said selectively specified vehicle with said estimated price and said information of said selected specification presented, and provides said input estimated price to said customer.

9. The vehicle sales support system of one of the preceding claims,
wherein said prescribed data stored in said reference information database corresponds to data regarding correlation between a specification and a price of the vehicle, and
said updating means corrects said calculation data set by each distributor and stored in said estimated price database in a manner that, in comparing a vehicle having a given specification with a vehicle having another specification, a difference in estimated price calculated by said estimated price calculating means corresponds to a difference in specification between these vehicles.

10. The vehicle sales support system of Claim 2,
wherein said prescribed data stored in said reference information database corresponds to data regarding correlation between a specification and a price of the vehicle, and
said correcting means corrects said estimated price in a manner that, in comparing the vehicle having said selected specification and a vehicle having another specification, a difference in estimated price calculated by said estimated price calculating means corresponds to a difference in specification between these vehicles.

11. A vehicle sales support program for controlling a vehicle sales support apparatus for supporting vehicle sales to customers online by allowing a customer to select, via communications lines, a preferred specification from a plurality of different specifications set with respect to a vehicle and sending, to said customer, an estimated price, which is set by a distributor specified by said customer among a plurality of distributors, of a selectively specified vehicle having said selected specification,
said vehicle sales support apparatus including:
a manufacturer recommended retail price database for storing data for enabling calculation of manufacturer recommended retail prices of vehicles respectively having said plurality of specifications;
an estimated price database for storing calculation data for enabling calculation of estimated prices, set by each of said plurality of distributors, of the vehicles respectively having said plurality of specifications; and
a reference information database for storing prescribed data necessary for correcting said calculation data stored in said estimated price database, and
said vehicle sales support program making said vehicle sales support apparatus execute:
a specification selecting step of allowing said customer to selectively input a desired specification with said plurality of specifications of the vehicle presented, setting said selectively input specification as said selected specification of said selectively specified vehicle, calculating a manufacturer recommended retail price of said selectively specified vehicle on the basis of said data stored in said manufacturer recommended retail price database, and providing said calculated manufacturer recommended retail price to said customer;
a distributor specifying step of allowing said customer to specify and input a desired distributor with said plurality of distributors presented, and setting said input distributor as a specified distributor;
an estimated price calculating step of calculating, in response to an estimate request input by said customer, an estimated price, which is set by said specified distributor set in said distributor specifying step, of said selectively specified vehicle set in said specification selecting step on the basis of said calculation data stored in said estimated price database;
an estimated price providing step of providing said estimated price calculated in said estimated price calculating step to said customer or providing said estimated price and information of said selected specification to said specified distributor; and
an updating step of correcting said calculation data set by each distributor stored in said estimated price database on the basis of said prescribed data stored in said reference information database, and updating said estimated price database on the basis of said corrected calculation data.

12. A vehicle sales support program for controlling a vehicle sales support apparatus for supporting vehicle sales to customers online by allowing a customer to select, via communications lines, a selected specification from a plurality of different specifications set with respect to a vehicle and sending, to said customer, an estimated price, which is set by a distributor specified by said customer among a plurality of distributors, of a selectively specified vehicle having said selected specification,
said vehicle sales support apparatus including:
a manufacturer recommended retail price database for storing data for enabling calculation of manufacturer recommended retail prices of vehicles respectively having said plurality of specifications;
an estimated price database for storing calculation data for enabling calculation of estimated prices, set by each of said plurality of distributors, of the vehicles respectively having said plurality of specifications; and
a reference information database for storing prescribed data necessary for correcting said estimated prices calculated on the basis of said calculation data stored in said estimated price database, and
said vehicle sales support program making said vehicle sales support apparatus execute:
a specification selecting step of allowing said customer to selectively input a desired specification with said plurality of specifications of the vehicle presented, setting said selectively input specification as said selected specification of said selectively specified vehicle, calculating a manufacturer recommended retail price of said selectively specified vehicle on the basis of said data stored in said manufacturer recommended retail price database, and providing said calculated manufacturer recommended retail price to said customer;
a distributor specifying step of allowing said customer to specify and input a desired distributor with said plurality of distributors presented, and setting said input distributor as a specified distributor;
an estimated price calculating step of calculating, in response to an estimate request input by said customer, an estimated price, which is set by said specified distributor set in said distributor specifying step, of said selectively specified vehicle set in said specification selecting step on the basis of said calculation data stored in said estimated price database;
a correcting step of correcting said estimated price calculated in said estimated price calculating step on the basis of said prescribed data stored in said reference information database; and
an estimated price providing step of providing said estimated price corrected in said correcting step to said customer or providing said estimated price corrected in said correcting step and information of said selected specification to said specified distributor.

13. The vehicle sales support program of Claim 11 or 12,
wherein said prescribed data stored in said reference information database corresponds to a sales start time of the vehicle, and
in said updating step, said calculation data set by each distributor and stored in said estimated price database is corrected on the basis of elapsed time from said sales start time of the vehicle in a manner that said estimated prices of the vehicles respectively having said plurality of specifications calculated in said estimated price calculating step are lower as said elapsed time is longer.

14. The vehicle sales support program of one of the preceding claims 11 to 13,
wherein said prescribed data stored in said reference information database corresponds to a sales start time of the vehicle, and
in said correcting step, said estimated price calculated in said estimated price calculating step is corrected on the basis of elapsed time from said sales start time of the vehicle to be lower as said elapsed time is longer.

15. The vehicle sales support program of one of the preceding claims 11 to 14,
wherein said prescribed data stored in said reference information database corresponds to an estimated price of a vehicle already provided to said customer and a lower limit estimated price set by each distributor with respect to each of said plurality of specifications, and
when it is found based on said prescribed information that said customer having input said estimate request is already provided with an estimated price of a vehicle having a specification identical to said selected specification related to said estimate request, said estimated price of said selectively specified vehicle calculated in said estimated price calculating step is corrected, in said correcting step, to be lower than said already provided estimated price by a given value and to be higher than said lower limit estimated price of said selected specification.

16. The vehicle sales support program of Claim 15,
wherein when said estimated price already provided to said customer having input said estimate request is provided by said specified distributor related to said estimate request, said estimated price calculated in said estimated price calculating step is inhibited from being corrected in said correcting step.

17. The vehicle sales support program of Claim 15 or 16,
wherein said vehicle sales support apparatus is further made to execute a lower limit modifying step of modifying said lower limit estimated price of each specification stored in said reference information database with respect to each distributor, and
in said lower limit modifying step, on the basis of said elapsed time from said sales start time of the vehicle, said lower limit estimated price of each specification is lowered as said elapsed time is longer.

18. The vehicle sales support program of one of the preceding claims 11 to 17,
wherein in said estimated price providing step, said specified distributor is allowed to input an estimated price of said selectively specified vehicle with said estimated price and said information of said selected specification presented, and said input estimated price is provided to said customer.

19. The vehicle sales support program of one of the preceding claims 11 to 18,
wherein said prescribed data stored in said reference information database corresponds to data regarding correlation between a specification and a price of the vehicle, and
in said updating step, said calculation data set by each distributor and stored in said estimated price database is corrected in a manner that, in comparing a vehicle having a given specification with a vehicle having another specification, a difference in estimated price calculated in said estimated price calculating step corresponds to a difference in specification between these vehicles.

20. The vehicle sales support program of one of the preceding claims 11 to 19,
wherein said prescribed data stored in said reference information database corresponds to data regarding correlation between a specification and a price of the vehicle, and
in said correcting step, said estimated price is corrected in a manner that, in comparing the vehicle having said selected specification and a vehicle having another specification, a difference in estimated price calculated in said estimated price calculating step corresponds to a difference in specification between these vehicles.

21. A vehicle sales support method for supporting vehicle sales to customers online by allowing a customer to select, via communications lines, a preferred specification from a plurality of different specifications set with respect to a vehicle and sending, to said customer, an estimated price, which is set by a distributor specified by said customer among a plurality of distributors, of a selectively specified vehicle having said selected specification, said vehicle sales support method using:
a manufacturer recommended retail price database for storing data for enabling calculation of manufacturer recommended retail prices of vehicles respectively having said plurality of specifications;
an estimated price database for storing calculation data for enabling calculation of estimated prices, set by each of said plurality of distributors, of the vehicles respectively having said plurality of specifications; and
a reference information database for storing prescribed data necessary for correcting said calculation data stored in said estimated price database,
said vehicle sales support method comprising:
a specification selecting step of allowing said customer to selectively input a desired specification with said plurality of specifications of the vehicle presented, setting said selectively input specification as said selected specification of said selectively specified vehicle, calculating a manufacturer recommended retail price of said selectively specified vehicle on the basis of said data stored in said manufacturer recommended retail price database, and providing said calculated manufacturer recommended retail price to said customer;
a distributor specifying step of allowing said customer to specify and input a desired distributor with said plurality of distributors presented, and setting said input distributor as a specified distributor;
an estimated price calculating step of calculating, in response to an estimate request input by said customer, an estimated price, which is set by said specified distributor set in said distributor specifying step, of said selectively specified vehicle set in said specification selecting step on the basis of said calculation data stored in said estimated price database;
an estimated price providing step of providing said estimated price calculated in said estimated price calculating step to said customer or providing said estimated price and information of said selected specification to said specified distributor; and
an updating step of correcting said calculation data set by each distributor stored in said estimated price database on the basis of said prescribed data stored in said reference information database, and updating said estimated price database on the basis of said corrected calculation data.

22. A vehicle sales support method for supporting vehicle sales to customers online by allowing a customer to select, via communications lines, a selected specification from a plurality of different specifications set with respect to a vehicle and sending, to said customer, an estimated price, which is set by a distributor specified by said customer among a plurality of distributors, of a selectively specified vehicle having said selected specification, said vehicle sales support method using:
a manufacturer recommended retail price database for storing data for enabling calculation of manufacturer recommended retail prices of vehicles respectively having said plurality of specifications;
an estimated price database for storing calculation data for enabling calculation of estimated prices, set by each of said plurality of distributors, of the vehicles respectively having said plurality of specifications; and
a reference information database for storing prescribed data necessary for correcting said estimated prices calculated on the basis of said calculation data stored in said estimated price database,
said vehicle sales support method comprising:
a specification selecting step of allowing said customer to selectively input a desired specification with said plurality of specifications of the vehicle presented, setting said selectively input specification as said selected specification of said selectively specified vehicle, calculating a manufacturer recommended retail price of said selectively specified vehicle on the basis of said data stored in said manufacturer recommended retail price database, and providing said calculated manufacturer recommended retail price to said customer;
a distributor specifying step of allowing said customer to specify and input a desired distributor with said plurality of distributors presented, and setting said input distributor as a specified distributor;
an estimated price calculating step of calculating, in response to an estimate request input by said customer, an estimated price, which is set by said specified distributor set in said distributor specifying step, of said selectively specified vehicle set in said specification selecting step on the basis of said calculation data stored in said estimated price database;
a correcting step of correcting said estimated price calculated in said estimated price calculating step on the basis of said prescribed data stored in said reference information database; and
an estimated price providing step of providing said estimated price corrected in said correcting step to said customer or providing said estimated price corrected in said correcting step and information of said selected specification to said specified distributor.

23. The vehicle sales support method of Claim 21 or 22,
wherein said prescribed data stored in said reference information database corresponds to a sales start time of the vehicle, and
in said updating step, said calculation data set by each distributor and stored in said estimated price database is corrected on the basis of elapsed time from said sales start time of the vehicle in a manner that said estimated prices of the vehicles respectively having said plurality of specifications calculated in said estimated price calculating step are lower as said elapsed time is longer.

24. The vehicle sales support method of Claim 21, 22 or 23,
wherein said prescribed data stored in said reference information database corresponds to a sales start time of the vehicle, and
in said correcting step, said estimated price calculated in said estimated price calculating step is corrected on the basis of elapsed time from said sales start time of the vehicle to be lower as said elapsed time is longer.

25. The vehicle sales support method of one of the preceding claims 21 to 24,
wherein said prescribed data stored in said reference information database corresponds to an estimated price of a vehicle already provided to said customer and a lower limit estimated price set by each distributor with respect to each of said plurality of specifications, and
when it is found based on said prescribed information that said customer having input said estimate request is already provided with an estimated price of a vehicle having a specification identical to said selected specification related to said estimate request, said estimated price of said selectively specified vehicle calculated in said estimated price calculating step is corrected, in said correcting step, to be lower than said already provided estimated price by a given value and to be higher than said lower limit estimated price of said selected specification.

26. The vehicle sales support method of Claim 25,
wherein when said estimated price already provided to said customer having input said estimate request is provided by said specified distributor related to said estimate request, said estimated price calculated in said estimated price calculating step is inhibited from being corrected in said correcting step.

27. The vehicle sales support method of Claim 25 or 26, further comprising a lower limit modifying step of modifying said lower limit estimated price of each specification stored in said reference information database with respect to each distributor,
wherein in said lower limit modifying step, on the basis of said elapsed time from said sales start time of the vehicle, said lower limit estimated price of each specification is lowered as said elapsed time is longer.

28. The vehicle sales support method of one of the preceding claims 21 to 27,
wherein in said estimated price providing step, said specified distributor is allowed to input an estimated price of said selectively specified vehicle with said estimated price and said information of said selected specification presented, and said input estimated price is provided to said customer.

29. The vehicle sales support method of one of the preceding claims 21 to 28,
wherein said prescribed data stored in said reference information database corresponds to data regarding correlation between a specification and a price of the vehicle, and
in said updating step, said calculation data set by each distributor and stored in said estimated price database is corrected in a manner that, in comparing a vehicle having a given specification with a vehicle having another specification, a difference in estimated price calculated in said estimated price calculating step corresponds to a difference in specification between these vehicles.

30. The vehicle sales support method of one of the preceding claims 21 to 29,
wherein said prescribed data stored in said reference information database corresponds to data regarding correlation between a specification and a price of the vehicle, and
in said correcting step, said estimated price is corrected in a manner that, in comparing the vehicle having said selected specification and a vehicle having another specification, a difference in estimated price calculated in said estimated price calculating step corresponds to a difference in specification between these vehicles.
